# EUROPEAN PATENT APPLICATION

(11) **EP 4 230 330 A1**
(43) Date of publication of application: **23.08.2023**
(21) Application number: 21941790.4
(22) Date of filing: 10.05.2021
(51) Int. Cl.: B23B 25/00, B23B 31/00, B23Q 11/00, B23Q 11/10

(54) **COOLANT DISCHARGE DEVICE, WORKPIECE HOLDING DEVICE, WORKPIECE ROTATING DEVICE, MACHINING TOOL, AND METHOD FOR USING COOLANT DISCHARGE DEVICE**

(71) Applicant: Yamazaki Mazak Corporation, Niwa-gun, Aichi 480-0197 (JP)
(72) Inventor: ASAI, Eri, Niwa-gun, Aichi 480-0197 (JP); MISHINA, Masahiro, Niwa-gun, Aichi 480-0197 (JP); YAMAMOTO, Yuki, Niwa-gun, Aichi 480-0197 (JP)
(74) Representative: TBK
(86) International application number: PCT/JP2021/017664
(87) International publication number: WO 2022/239056

(57) **Abstract**

A coolant discharger includes a rotator that has a through hole extending along a rotation axis of the rotator and that is rotatable about the rotation axis together with a workpiece, a fluid passage provided in the through hole, and a nozzle fluidally connected to the fluid passage and configured to discharge a coolant in a direction away from the rotation axis. A position of at least a part of the nozzle is changeable in a direction parallel to the rotation axis.

## Description

### Technical Field

The present invention relates to a coolant discharger, a workpiece holder, a workpiece rotator, a machine tool, and a method of using a coolant discharger.

### Background Art

Fluid dischargers are known to discharge fluid toward a workpiece.

As a related technique, patent literature 1 discloses a chip washing system. The chip washing system recited in patent literature 1 includes a conduit disposed within a longitudinal bore of a spindle, an end of the conduit which end extends into a longitudinal flow fluid passage defined partially by the inside diameter of a workpiece, and means for preventing the conduit from rotating as the spindle rotates. Fluid is discharged from the end of the conduit and washes chips away from the inner surface of the workpiece.

### Citation List

### Cited Literature

PTL 1: US 4322992 B1

### Summary of Invention

### Technical Problem

It is an object of the present invention to provide a coolant discharger, a workpiece holder, a workpiece rotator, a machine tool that are capable of reducing the amount of a coolant discharged toward a workpiece to contribute to environmental protection. It is also an object of the present invention to provide a method of using such coolant discharger. Solution to Problem

According to some embodiments of the present invention, a coolant discharger includes a rotator that has a through hole extending along a rotation axis of the rotator and that is rotatable about the rotation axis together with a workpiece, a fluid passage provided in the through hole, and a nozzle fluidally connected to the fluid passage and configured to discharge a coolant in a direction away from the rotation axis. A position of at least a part of the nozzle is changeable in a direction parallel to the rotation axis.

According to some embodiments of the present invention, a workpiece holder includes the above-described coolant discharger and a workpiece holding member configured to hold the workpiece. The rotator includes a shaft having the through hole, and the workpiece holding member.

According to some embodiments of the present invention, a workpiece rotator includes the above-described workpiece holder, a shaft support member configured to rotatably support the shaft, and a rotational driver configured to rotate the shaft about the rotation axis relative to the shaft support member.

According to some embodiments of the present invention, a machine tool includes the above-described workpiece rotator, a tool holder configured to hold a tool with which the workpiece is machined, a second driver configured to move the tool holder relative to the workpiece holder, and a controller configured to control the coolant discharger, the rotational driver, and the second driver.

According to some embodiments of the present invention, in a method of using a coolant discharger, the coolant discharger includes a rotator that has a through hole extending along a rotation axis of the rotator and that is rotatable about the rotation axis, a fluid passage provided in the through hole, and a nozzle fluidally connected to the fluid passage and configured to discharge a coolant. A position of at least a part of the nozzle is changeable in a direction parallel to the rotation axis. The method of using the coolant discharger includes an attaching step of attaching a workpiece to the rotator, a rotating step of rotating the rotator attached with the workpiece about the rotation axis, a discharging step of discharging the coolant from the nozzle toward the workpiece, and a position changing step of changing a position of at least the part of the nozzle in the direction parallel to the rotation axis.

### Effects of Invention

The present invention provides a coolant discharger, a workpiece holder, a workpiece rotator, and a machine tool that contribute to environmental protection. The present invention also provides a method of using such coolant discharger.

### Brief Description of Drawings

[FIG. 1] FIG. 1 is a schematic cross-sectional view of a coolant discharger according to a first embodiment.
[FIG. 2] FIG. 2 is a schematic cross-sectional view of the coolant discharger according to the first embodiment.
[FIG. 3] FIG. 3 is a schematic cross-sectional view of the coolant discharger according to the first embodiment.
[FIG. 4] FIG. 4 is a schematic perspective view of an example first nozzle.
[FIG. 5] FIG. 5 is a schematic cross-sectional view of the example first nozzle.
[FIG. 6] FIG. 6 is a schematic cross-sectional view of the example first nozzle.
[FIG. 7] FIG. 7 is a schematic perspective view of a modification of the first nozzle.
[FIG. 8] FIG. 8 is a schematic front view of the modification of the first nozzle.
[FIG. 9] FIG. 9 is a schematic cross-sectional view of a coolant discharger according to a modification of the first embodiment.
[FIG. 10] FIG. 10 is a schematic cross-sectional view of the modification of the first nozzle.
[FIG. 11] FIG. 11 is a schematic perspective view of an example second nozzle.
[FIG. 12] FIG. 12 is a schematic cross-sectional view of an example nozzle.
[FIG. 13] FIG. 13 is a schematic cross-sectional view of a first modification of the nozzle.
[FIG. 14] FIG. 14 is a schematic cross-sectional view of a workpiece holder according to the first embodiment.
[FIG. 15] FIG. 15 is a schematic cross-sectional view of a workpiece rotator according to the first embodiment.
[FIG. 16] FIG. 16 is a schematic cross-sectional view of the workpiece holder according to a first modification of the first embodiment.
[FIG. 17] FIG. 17 is a schematic cross-sectional view of the workpiece holder according to a second modification of the first embodiment.
[FIG. 18] FIG. 18 is a schematic cross-sectional view of the coolant discharger according to a second embodiment.
[FIG. 19] FIG. 19 is a schematic cross-sectional view of the coolant discharger according to the second embodiment.
[FIG. 20] FIG. 20 is a schematic cross-sectional view of the nozzle supported by a nozzle support member.
[FIG. 21] FIG. 21 is a schematic cross-sectional view of the coolant discharger according to a first modification of the second embodiment.
[FIG. 22] FIG. 22 is a schematic cross-sectional view of the nozzle supported by the nozzle support member via a spacer.
[FIG. 23] FIG. 23 is a schematic cross-sectional view of the coolant discharger according to the first modification of the second embodiment.
[FIG. 24] FIG. 24 is a schematic cross-sectional view of the coolant discharger according to the first modification of the second embodiment.
[FIG. 25] FIG. 25 is a schematic cross-sectional view of the coolant discharger according to the first modification of the second embodiment.
[FIG. 26] FIG. 26 is a schematic cross-sectional view of a workpiece rotator according to the second embodiment.
[FIG. 27] FIG. 27 is a schematic cross-sectional view of the workpiece holder according to the first modification of the second embodiment.
[FIG. 28] FIG. 28 is a schematic perspective view of a machine tool according to a third embodiment.
[FIG. 29] FIG. 29 is a flowchart of a method, according to an embodiment, of using a coolant discharger.

### Description of Embodiments

By referring to the accompanying drawings, description will be made with regard to a coolant discharger 1, a workpiece holder 11, a workpiece rotator 10, a machine tool 100, and a method of using the coolant discharger. It is noted that in the following description of the embodiments, identical reference numerals are used to denote identical portions, members, or components having identical functions, and redundant description of identical portions, members, or components will be eliminated.

### (Definitions of Directions)

In this specification, first direction *DR1* is defined as a direction from a base end portion of a rotator 2 (or a base end portion 21 of a shaft 20) toward a leading end portion of the rotator 2 (or a leading end portion 22 of the shaft 20). Also, second direction *DR2* is defined as a direction opposite to the first direction *DR1.*

### (First Embodiment)

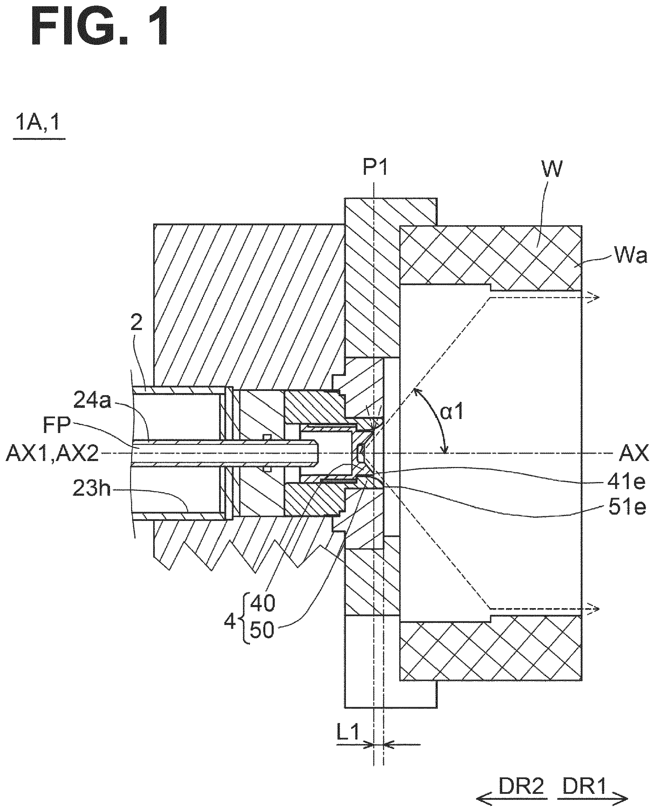

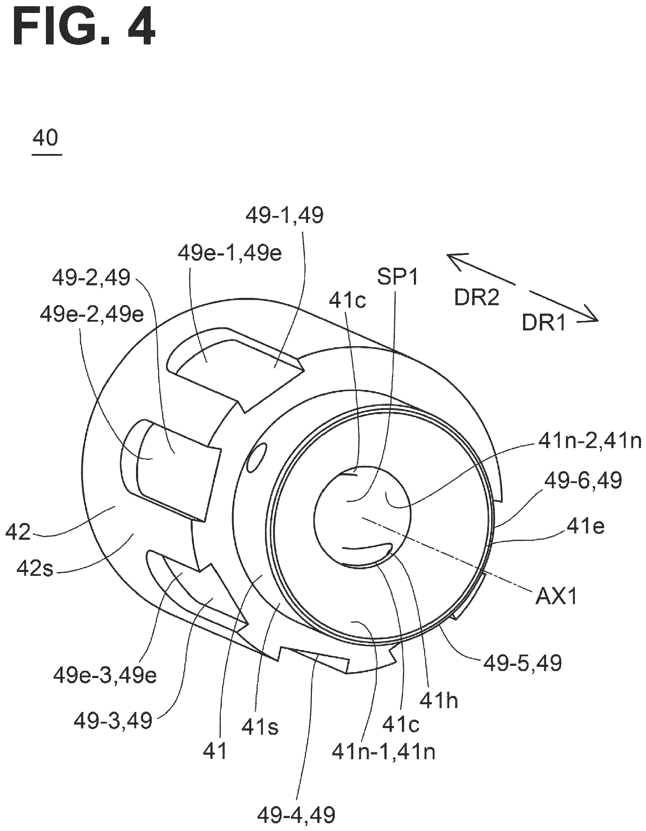

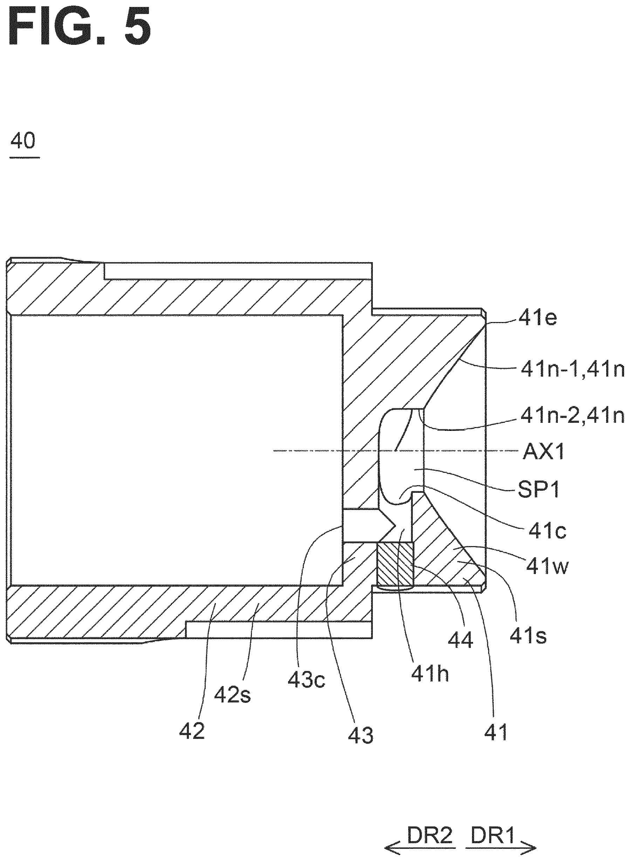

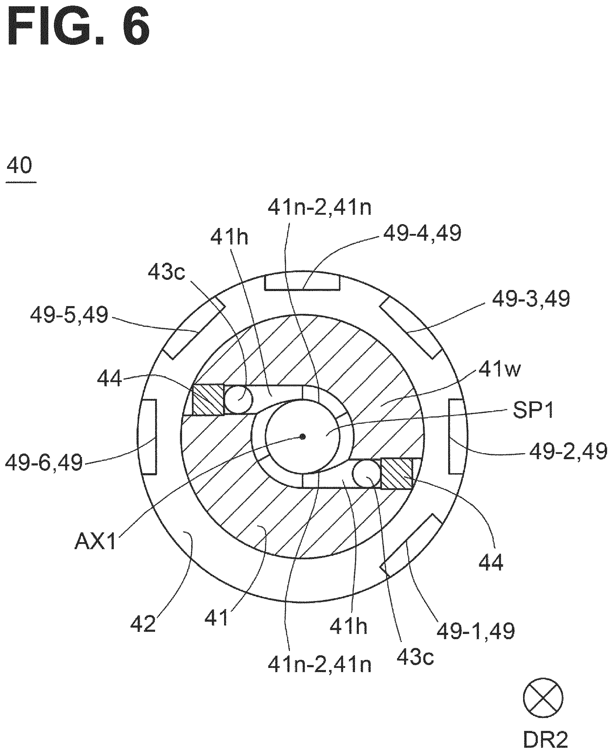

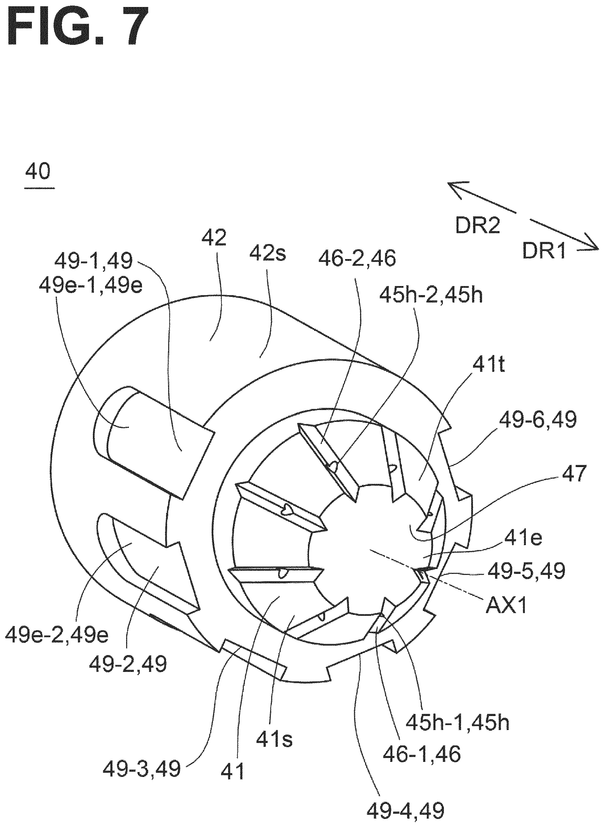

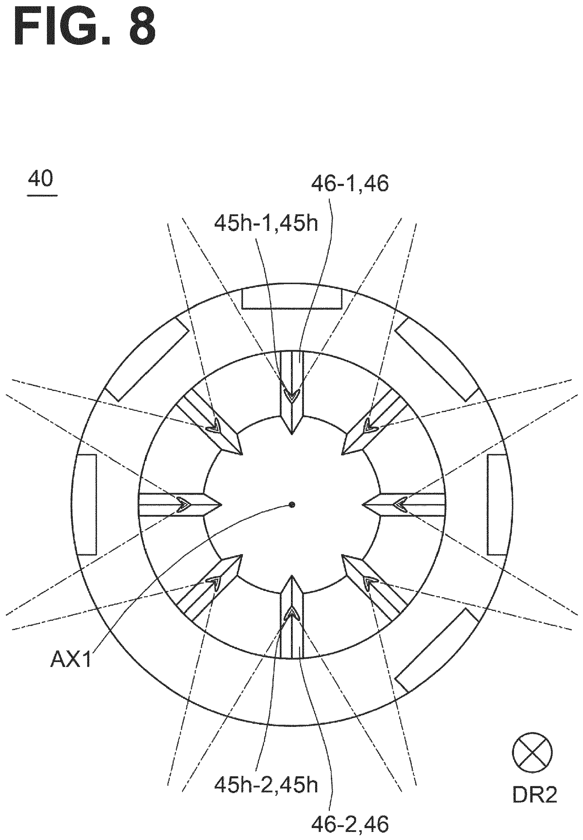

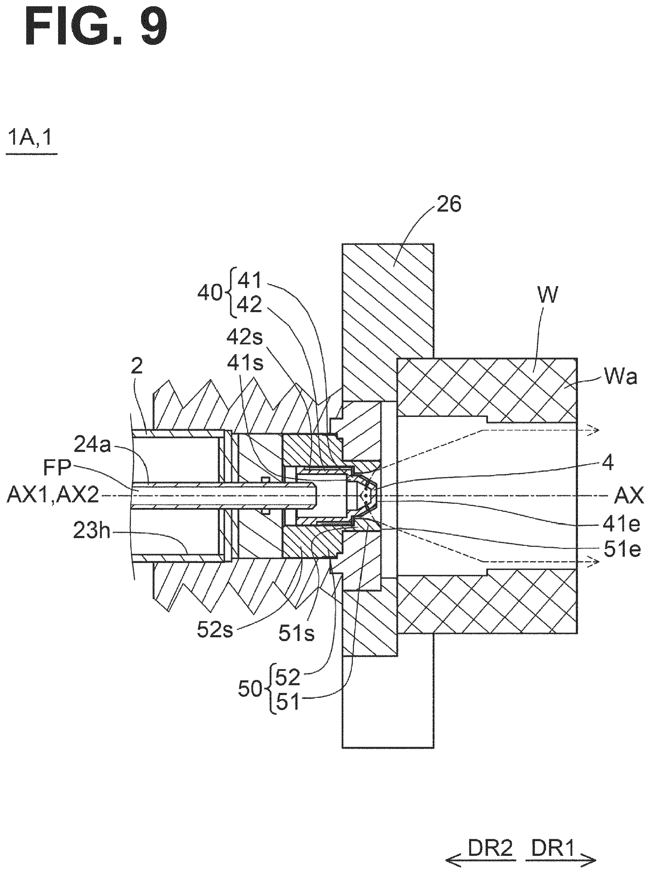

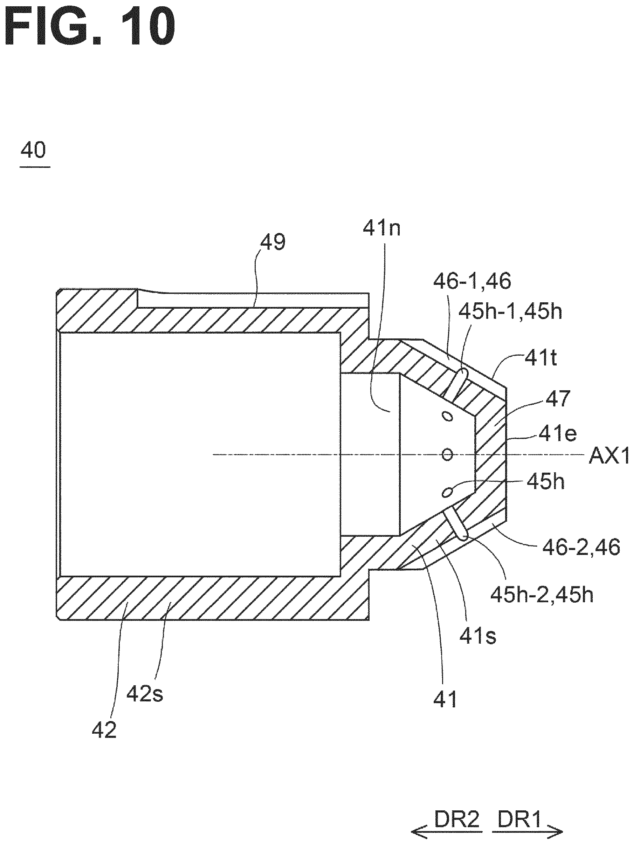

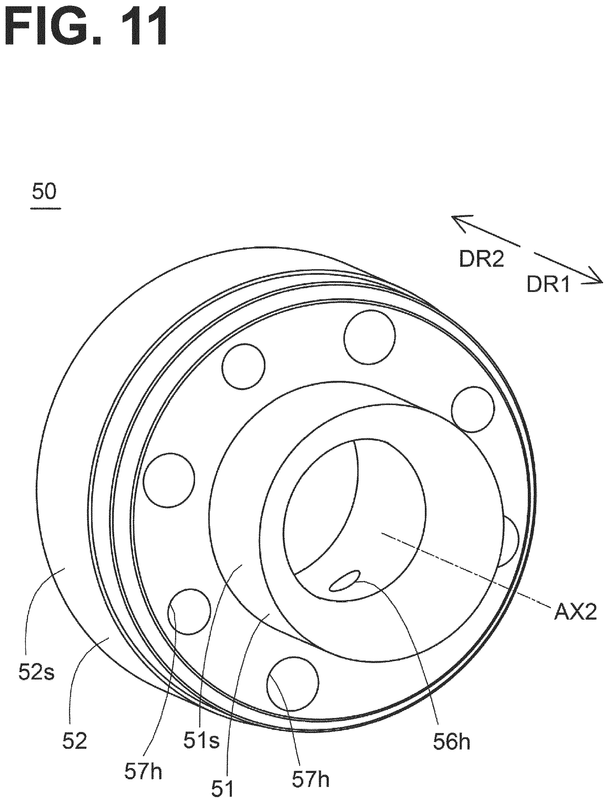

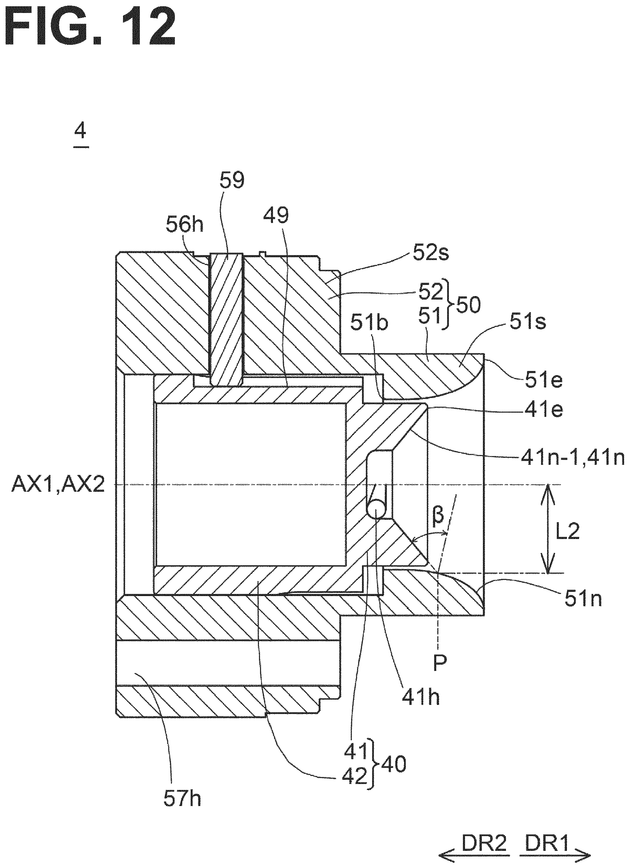

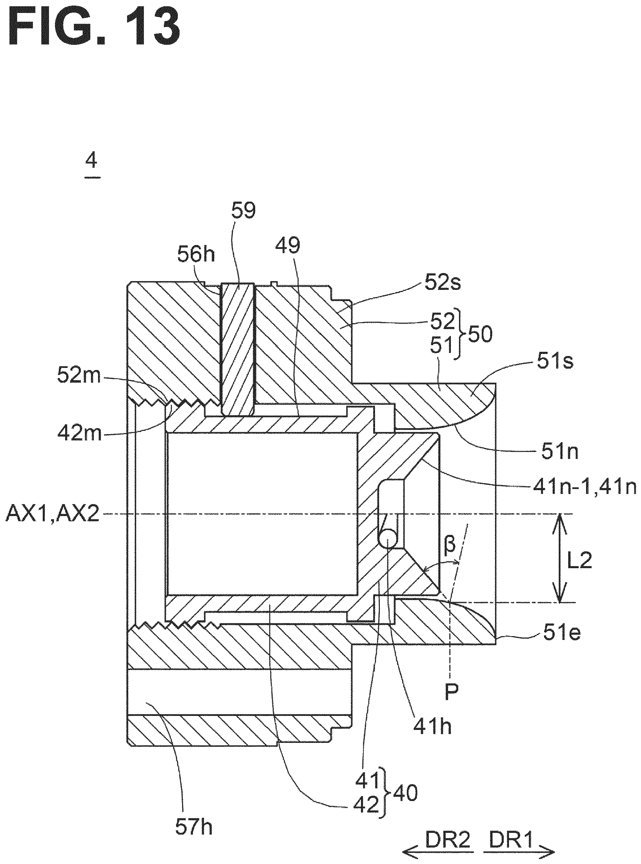

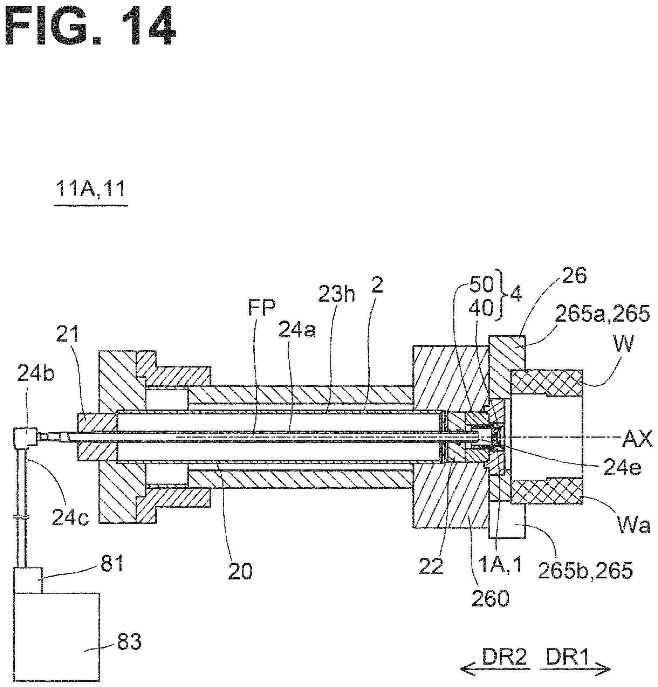

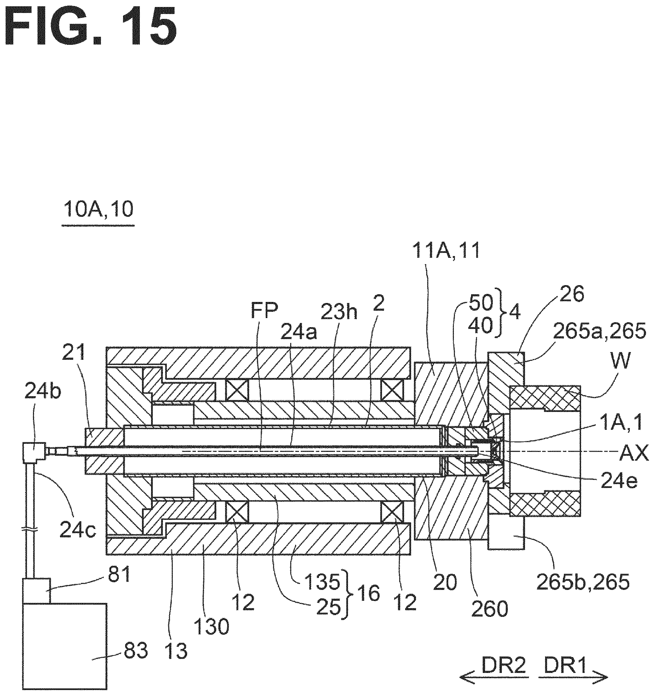

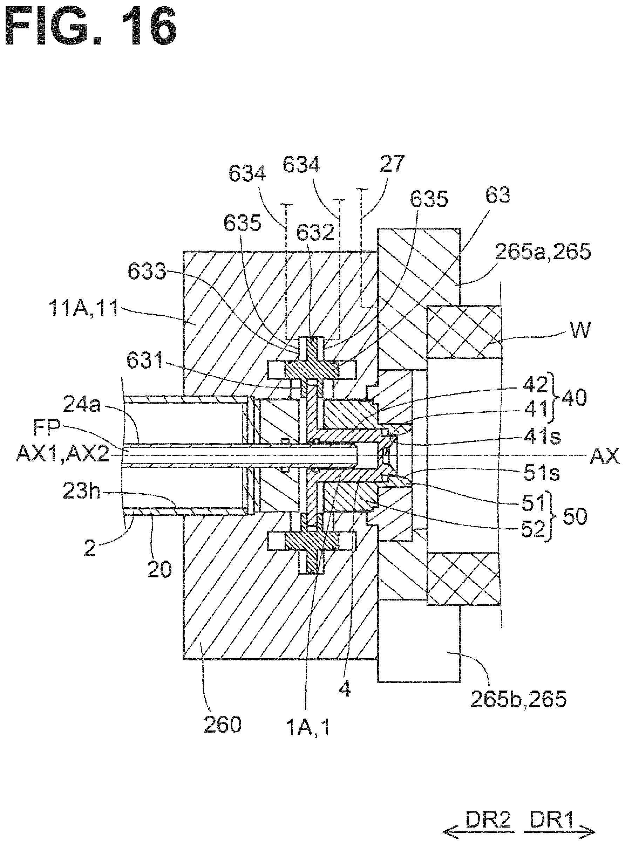

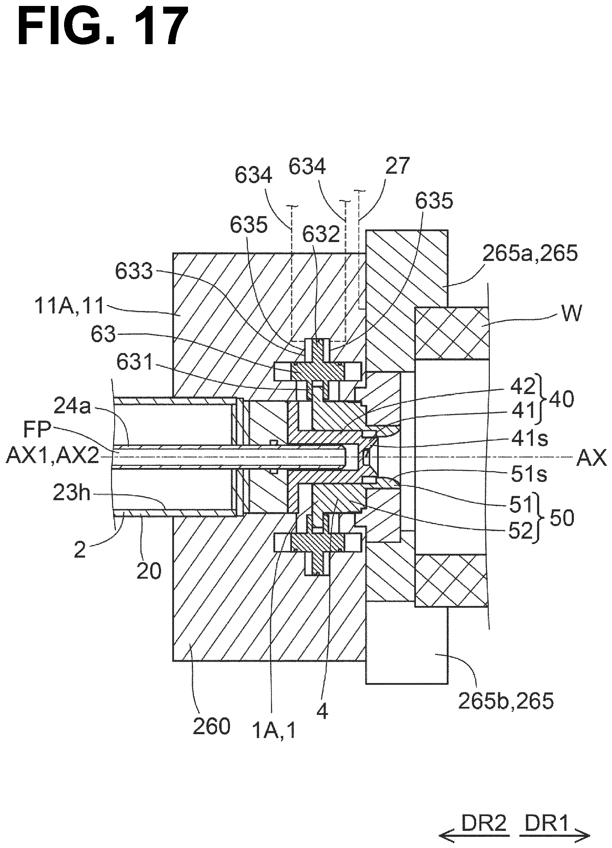

By referring to FIGs. 1 to 17, description will be made with regard to a coolant discharger 1A according to the first embodiment, a workpiece holder 11A according to the first embodiment, and a workpiece rotator 10A according to the first embodiment. FIGs. 1 to 3 are schematic cross-sectional views of the coolant discharger 1A according to the first embodiment. FIG. 4 is a schematic perspective view of an example of a first nozzle 40. FIG. 5 is a schematic cross-sectional view of an example of the first nozzle 40. FIG. 6 is a schematic cross-sectional view of an example of the first nozzle 40. FIG. 7 is a schematic perspective view of a modification of the first nozzle 40. FIG. 8 is a schematic front view of a modification of the first nozzle 40. FIG. 9 is a schematic cross-sectional view of the coolant discharger 1A according to a modification of the first embodiment. FIG. 10 is a schematic cross-sectional view of a modification of the first nozzle 40. FIG. 11 is a schematic perspective view of an example of a second nozzle 50. FIG. 12 is a schematic cross-sectional view of an example of the nozzle 4. FIG. 13 is a schematic cross-sectional view of a first modification of the nozzle 4. FIG. 14 is a schematic cross-sectional view of the workpiece holder 11A according to the first embodiment. FIG. 15 is a schematic cross-sectional view of the workpiece rotator 10A according to the first embodiment. FIG. 16 is a schematic cross-sectional view of the workpiece holder 11A according to a first modification of the first embodiment. FIG. 17 is a schematic cross-sectional view of the workpiece holder 11A according to a second modification of the first embodiment.

As exemplified in FIG. 1, the coolant discharger 1A according to the first embodiment includes the rotator 2, a fluid passage FP, and the nozzle 4.

The rotator 2 has a through hole 23h, which extends along a rotation axis AX of the rotator 2. The rotator 2 is rotatable about the rotation axis AX together with a workpiece W. More specifically, the rotator 2 is rotatable about the rotation axis AX; as the rotator 2 rotates, the workpiece W rotates together with the rotator 2.

The fluid passage FP is provided in the through hole 23h. In the example illustrated in FIG. 1, a supply conduit 24a is provided in the through hole 23h, and the supply conduit 24a defines the fluid passage FP. Alternatively, the fluid passage FP may be defined by the inner surface of the through hole 23h.

The nozzle 4 is capable of discharging fluid in a direction away from the rotation axis AX. With the workpiece W in a state of being attached to the rotator 2, the fluid discharged from the nozzle 4 collides with the workpiece W. The nozzle 4 receives a supply of fluid through the fluid passage FP. In other words, the nozzle 4 is fluidally connected to the fluid passage FP. The fluid supplied to the nozzle 4 has a function of cooling the workpiece W. In the following description, therefore, the fluid supplied to the nozzle 4 will be referred to as "coolant". The coolant supplied to the nozzle 4 contains an additive(s) such as oil, surfactant, and lubricant.

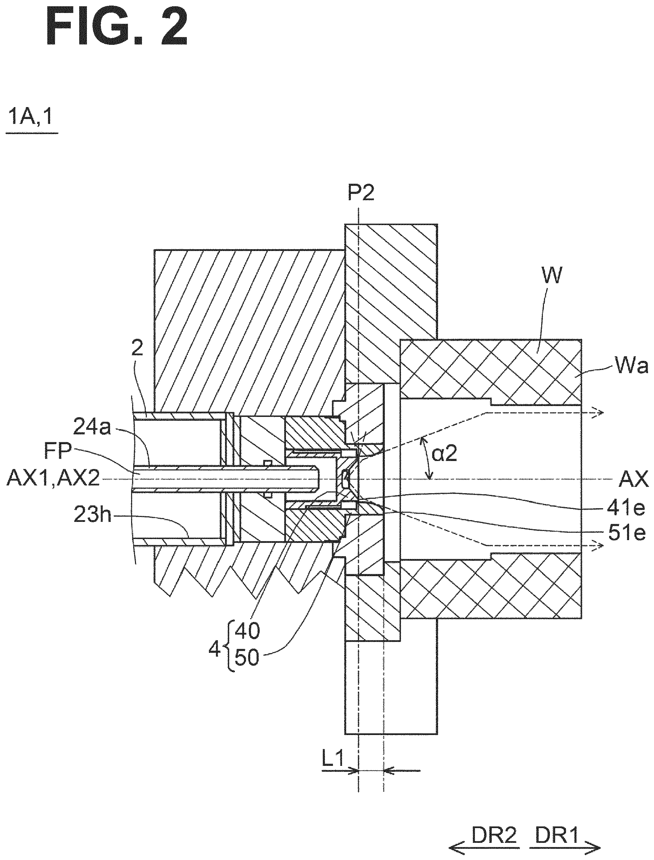

As exemplified in FIGs. 1 and 2, the position of at least a part of the nozzle 4 (more specifically, the first nozzle 40) is changeable in a direction parallel to the rotation axis AX. More specifically, the position of the first nozzle 40 is changeable in a direction parallel to the rotation axis AX between a first position P1 (see FIG. 1) and a second position P2 (see FIG. 2).

In the first embodiment, the nozzle 4 is provided on the side of the rotator 2 which side rotates the workpiece W. Also, the coolant discharged from the nozzle 4 toward the workpiece W has a momentum component in the first direction *DR1.* This ensures a smooth flow of coolant when the coolant is discharged toward the workpiece W, cools the workpiece W, and is discharged from the workpiece W. As a result, the workpiece W is efficiently cooled or lubricated. Also, in a case where chips are attached to the workpiece W, the chips are efficiently removed from an end portion Wa of the workpiece W. The end portion Wa is located on the first direction *DR1* side of the workpiece W.

Usually, machining of the inner diameter of a workpiece includes machining the workpiece using a tool while moving the tool in the second direction *DR2.* In this machining, coolant is supplied in the direction from a tool or a tool holder holding the tool toward the workpiece (in other words, approximately in the second direction *DR2*). In this case, the chips temporarily proceed in the second direction DR2together with the coolant, and some of the chips are discharged from the space between the workpiece and a chuck holding the workpiece. In contrast, most of the chips change direction and proceed in the first direction *DR1* together with the coolant. Then, the most of the chips are discharged from the end in the first direction *DR1* of the workpiece together with the coolant. With this configuration, in order to reliably remove the chips from the workpiece, it is necessary to prepare a large size coolant pump that supplies a large amount of coolant. In this case, however, chips are removed inefficiently while a high level of power consumption is involved. Thus, since a large amount of coolant is used, there is a large amount of load on the environment.

In contrast, in the first embodiment, the coolant flows smoothly enough to remove the chips efficiently. This reduces the amount of coolant used, resulting in a reduction in power consumption. Reducing the amount of coolant used means reducing the amount of coolant collected, in other words, reducing the amount of waste fluid. Thus, in the first embodiment, the coolant discharger 1A contributes to environmental protection.

Also in the first embodiment, the position of at least a part of the nozzle 4 (more specifically, the first nozzle 40) is changeable in a direction parallel to the rotation axis AX. By this position changing, the part of the workpiece W at which the coolant discharged from the nozzle 4 collides with the workpiece W is adjusted. In this case, the application of coolant can focus on a part of the workpiece W that needs cooling, lubrication, or like treatment. This ensures a further reduction in the amount of coolant discharged from the nozzle 4.

### (Optional Configurations)

Next, by referring to FIGs. 1 to 17, description will be made with regard to optional configurations employable in the coolant discharger 1A according to the first embodiment.

### (Workpiece W)

In the example illustrated in FIG. 1, the workpiece W has an inner surface machinable using a tool. An example of the workpiece W is a cylindrical structure. In this case, the nozzle 4 discharges coolant toward the inner surface of the cylindrical workpiece W. In the example illustrated in FIG. 1, an end portion of the workpiece W on the second direction *DR2* side is held by the rotator 2. In contrast, an end portion of the workpiece W on the first direction *DR1* side is a free end portion (in other words, end portion not supported by the rotator 2).

### (Nozzle 4)

In the example illustrated in FIG. 1, the nozzle 4 is rotatable about the rotation axis AX together with the rotator 2. More specifically, the nozzle 4 is mounted on the rotator 2 so that the nozzle 4 is rotatable about the rotation axis AX. In this case, the nozzle 4 rotates about the rotation axis AX together with the rotator 2 and the workpiece W.

In the configuration in which the nozzle 4 is rotatable about the rotation axis AX, centrifugal force is applied to the coolant passing through the nozzle 4. As a result, the coolant discharged from the nozzle 4 is effectively diffused in a direction(s) away from the rotation axis AX. This configuration reduces the amount of coolant that is not diffused toward the workpiece W and that instead proceeds in a region near the rotation axis AX. In other words, the above configuration reduces the amount of coolant that does not contribute to cooling or lubrication of an intended part of the workpiece W, or reduces the amount of coolant that does not contribute to removal of chips.

In another embodiment, however, the nozzle 4 may be a non-rotatable nozzle that does not rotate about the rotation axis AX. More specifically, the supply conduit 24a may be supported by the rotator 2 via a bearing, and the nozzle 4 may be fixed to a leading end portion of the supply conduit 24a.

In the example illustrated in FIG. 1, the nozzle 4 includes the first nozzle 40 and the second nozzle 50. In a configuration in which the nozzle 4 is rotatable about the rotation axis AX, both the first nozzle 40 and the second nozzle 50 are preferably rotatable about the rotation axis AX. In another embodiment, however, one of the first nozzle 40 and the second nozzle 50 may be rotatable about the rotation axis AX. In the example illustrated in FIG. 1, a center axis of the first nozzle 40 coincides with the rotation axis AX (the center axis of the first nozzle 40 will be hereinafter referred to as "first axis AX1"). Also, a center axis of the second nozzle 50 coincides with the first axis AX1 of the first nozzle 40 (the center axis of the second nozzle 50 will be hereinafter referred to as "second axis AX2").

In the example illustrated in FIG. 1, the first nozzle 40 receives the coolant supplied through the fluid passage FP and discharges the coolant in a direction away from the rotation axis AX. More specifically, the first nozzle 40 discharges coolant to make the coolant have a momentum component in the first direction *DR1* and a momentum component in a direction away from the rotation axis AX. Additionally, the first nozzle 40 may discharge the coolant to make the coolant gain a circumferential momentum component around the rotation axis AX. The circumferential momentum component may be applied to the coolant by the friction between the coolant and the surface of the nozzle 4 rotating about the rotation axis AX. The circumferential momentum component may also be applied to the coolant when the coolant is discharged along a circumferential direction from supply hole portions 41h, described later.

In the example illustrated in FIG. 2, the second nozzle 50 contacts the coolant discharged from the first nozzle 40 to change the direction of progress of the coolant. More specifically, the coolant discharged from the first nozzle 40 collides with the inner surface of the second nozzle 50, and thus the direction of progress of the coolant is changed.

In the examples illustrated in FIGs. 1 and 2, the relative position of the first nozzle 40 relative to the second nozzle 50 is changeable in a direction parallel to the rotation axis AX. More specifically, the relative position of the first nozzle 40 relative to the second nozzle 50 is changeable between the first position P1 (see FIG. 1) and the second position P2 (see FIG. 2). At the first position P1, the distance, *LI,* between a leading end 41e of the first nozzle 40 and a leading end 51e of the second nozzle 50 is minimum. At the second position P2, the distance *LI* between the leading end 41e of the first nozzle 40 and the leading end 51e of the second nozzle 50 is maximum.

By changing the distance *LI* between the leading end 41e of the first nozzle 40 and the leading end 51e of the second nozzle 50, the part of the workpiece at which the coolant discharged from the nozzle 4 collides with the workpiece is changed. For example, when the position of the first nozzle 40 is the first position P1, at which the distance *L1* is minimum, the coolant is caused to collide with a part of the inner surface of the workpiece W which part is located relatively on the second direction *DR2* side. In particular, when the workpiece W has a large inner diameter, the coolant is caused to collide with the inner surface of the workpiece W (see FIG. 1) more appropriately. In contrast, when the position of the first nozzle 40 is the second position P2, at which the distance *L1* is maximum, the coolant is caused to collide with a part of the inner surface of the workpiece W which part is located relatively on the first direction *DR1* side. In particular, when the workpiece W has a small inner diameter, the coolant is caused to collide with the inner surface of the workpiece W (see FIG. 2) more appropriately.

When the position of the first nozzle 40 is the first position P1 (see FIG. 1), at which the distance *L1* between the leading end 41e of the first nozzle 40 and the leading end 51e of the second nozzle 50 is minimum, the discharge angle of the coolant discharged from the nozzle 4 is *α1.* When the position of the first nozzle 40 is the second position P2 (see FIG. 2), at which the distance *LI* between the leading end 41e of the first nozzle 40 and the leading end 51e of the second nozzle 50 is maximum, the discharge angle of the coolant discharged from the nozzle 4 is *α2.* The discharge angle *α1* is larger than the discharge angle *α2.* It is to be noted that in this specification, the discharge angle of the coolant is the angle defined between the diffusion direction of the coolant discharged from the nozzle 4 and the rotation axis AX.

In the example illustrated in FIG. 1, when the first nozzle 40 is at the first position P1, the discharge angle *α1* of the coolant discharged from the nozzle 4 is 35 degrees or greater, 40 degrees or greater, 45 degrees or greater. In the example illustrated in FIG. 2, when the first nozzle 40 is at the second position P2, the discharge angle *α2* of the coolant discharged from the nozzle 4 is 30 degrees or less, or 25 degrees or less. It is to be noted that the discharge angle *α1* and/or the discharge angle *α2* may be changed to outside the above-described numerical ranges by changing, for example, the inner surface shape of the first nozzle 40 or the inner surface shape of the second nozzle 50.

In the example illustrated in FIG. 1, the second nozzle 50 is fixed to the rotator 2. In contrast, the position of the first nozzle 40 is changeable in a direction parallel to the rotation axis AX relative to the second nozzle 50 and the rotator 2. Alternatively, the first nozzle 40 may be fixed to the rotator 2, and the position of the second nozzle 50 may be changeable in a direction parallel to the rotation axis AX relative to the first nozzle 40 and the rotator 2.

### (First Nozzle 40)

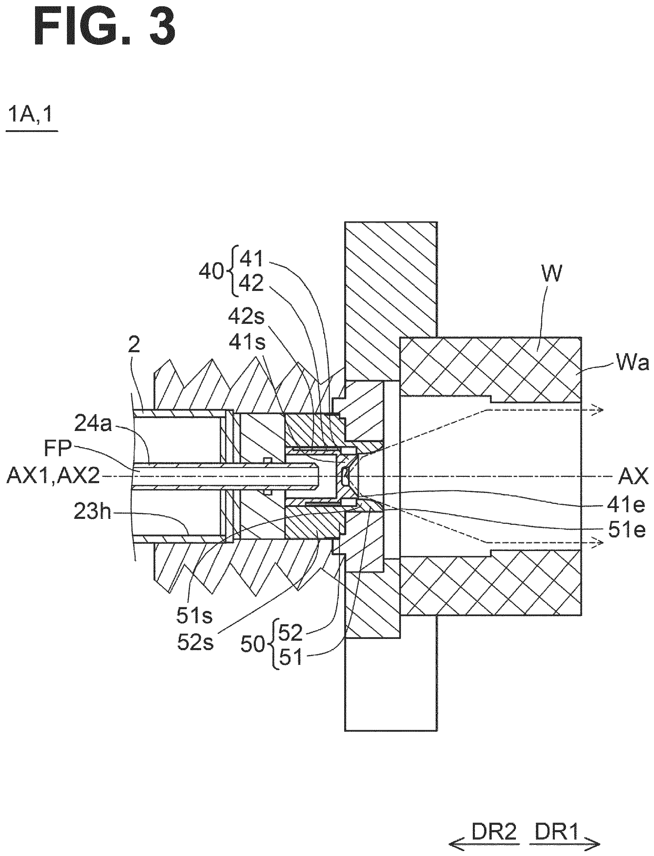

In the example illustrated in FIG. 3, the first nozzle 40 has a leading end portion 41 and a base end portion 42. To the leading end portion 41, coolant is supplied from the base end portion 42. In the example illustrated in FIG. 4, the leading end portion 41 is made up of a first cylinder portion 41s. The base end portion 42 is made up of a second cylinder portion 42s. As exemplified in FIG. 4, the outer diameter of the second cylinder portion 42s may be larger than the outer diameter of the first cylinder portion 41s.

In the example illustrated in FIG. 4, at the leading end portion 41 of the first nozzle 40, the first nozzle 40 has a first inner surface 41n-1. The first inner surface 41n-1 receives the coolant supplied through the fluid passage FP and diffuses the coolant in all directions of 360 degrees about the rotation axis AX. In the example illustrated in FIG. 4, the distance between the rotation axis AX and a first inner surface 41n-1 increases from the base end of the first nozzle 40 toward the leading end 41e of the first nozzle 40.

In a configuration in which the coolant is diffused in all directions of 360 degrees about the rotation axis AX, the coolant can be applied approximately uniformly to the inner surface of the workpiece W in its circumferential direction. This configuration ensures that when the workpiece W is machined while being rotated about the rotation axis AX, the workpiece W is cooled or lubricated effectively. The above configuration also ensures that chips are removed effectively from the workpiece W.

In the example illustrated in FIG. 5, the first inner surface 41n-1 is a conical shaped surface whose inner diameter increases toward the leading end 41e of the first nozzle 40 (in other words, the distance between the first axis AX1 and the first inner surface 41n-1 increases at an approximately constant rate toward the leading end 41e of the first nozzle 40). Alternatively, the first inner surface 41n-1 may be a trumpet shaped surface whose inner diameter increases toward the leading end portion 41e (in other words, in the illustrated cross-sectional view including the first axis AX1, the inclination angle of the first inner surface 41n-1 relative to the first axis AX1 may continuously increase toward the leading end 41e of the first nozzle 40).

In this specification, a "cone nozzle" is defined as a nozzle having an inner surface whose inner diameter continuously increases toward a leading end portion of the cone nozzle. The first nozzle 40 illustrated in FIG. 5 has the first inner surface 41n-1, whose inner diameter continuously increases toward the leading end portion 41e. Therefore, the first nozzle 40 is a cone nozzle.

As exemplified in FIG. 5, the leading end portion 41 of the first nozzle 40 may have a cylindrical inner surface 41n-2 in addition to the first inner surface 41n-1. The cylindrical inner surface 41n-2 is located further on the second direction *DR2* side than the first inner surface 41n-1. In the example illustrated in FIG. 5, the distance between the rotation axis AX and the cylindrical inner surface 41n-2 remains substantially unchanged along the rotation axis AX, that is, the distance is approximately uniform along the rotation axis AX.

In the example illustrated in FIG. 5, the first nozzle 40 (in other words, the cone nozzle) has the base end portion 42, the leading end portion 41, and the supply hole portions 41h. from each supply hole portion 41h, coolant is supplied from the inside of a wall 41w, which constitutes the leading end portion 41. In the example illustrated in FIG. 5, from each of the supply hole portions 41h, coolant is supplied toward the first inner surface 41n-1 of the leading end portion 41 via the cylindrical inner surface 41n-2. Alternatively, it is possible to supply coolant from each supply hole portion 41h directly to the first inner surface 41n-1 of the leading end portion 41, without the intermediation by the cylindrical inner surface 41n-2. In the example illustrated in FIG. 5, coolant is supplied to a space SP1 through each supply hole portion 41h from the inside of the wall 41w, which constitutes the leading end portion 41. The space SP1 is defined by the inner surface, 41n, of the leading end portion 41. This configuration reduces the momentum of the coolant in a direction along the first direction *DR1.* This, as a result, reduces the amount of coolant that is not diffused in a direction(s) away from the first axis AX1 and that instead proceeds in a region near the first axis AX1.

As exemplified in FIG. 6, each supply hole portion 41h is formed in the leading end portion 41. Each supply hole portion 41h may be a hole portion from which coolant is supplied along the direction of a tangent on the inner surface 41n of the leading end portion 41 to make the coolant gain a circumferential momentum component around the first axis AX1. In this case, coolant is discharged to the space SP1 from each supply hole portion 41h in a manner in which the coolant forms a spiral flow along the inner surface 41n of the leading end portion 41 immediately after the coolant is discharged to the space SP1.

In the example illustrated in FIG. 6, two supply hole portions 41h are formed in the leading end portion 41 of the first nozzle 40. It is also possible, however, that one supply hole portion 41h or three or more supply hole portions 41h is or are formed in the leading end portion 41.

In the example illustrated in FIG. 5, the first nozzle 40 has the leading end portion 41 (more specifically, the first cylinder portion 41s) and a partition wall 43. The partition wall 43 is provided between the leading end portion 41 and the base end portion 42 (more specifically, the second cylinder portion 42s). The partition wall 43 prevents or restricts the coolant supplied from the fluid passage FP from proceeding linearly along the first axis AX1. Preventing or restricting the coolant from proceeding linearly reduces the amount of coolant that is not diffused in a direction(s) away from the first axis AX1 and that instead proceeds in a region near the first axis AX1.

In the example illustrated in FIG. 5, a first opening 43c is formed in the partition wall 43. The first opening 43c communicates with the supply hole portion 41h. More specifically, the supply hole portion 41h fluidally connects the first opening 43c, which is formed in the partition wall 43, to a second opening 41c. The second opening 41c is formed on the inner surface of the leading end portion 41 of the first nozzle 40. Coolant is introduced from the first opening 43c to the supply hole portion 41h. In the supply hole portion 41h, the direction of progress of the coolant is changed so that the coolant is discharged to the space SP1 from the second opening 41c, which is formed on the inner surface of the leading end portion 41. It is to be noted that in the example illustrated in FIG. 5, a part of the supply hole portion 41h which part is connected to the outer surface of the wall 41w is blocked by a closing member 44, such as a thread.

The configuration of the first nozzle 40 is also applicable in the second embodiment, described later (in other words, applicable in a coolant discharger 1B, in which the second nozzle 50 is omitted).

### (Modification of First Nozzle 40)

By referring to FIGs. 7 to 10, a modification of the first nozzle 40 will be described. In the example illustrated in FIG. 5, the first nozzle 40 discharges coolant from the first inner surface 41n-1 to the outside of the first nozzle 40. In contrast, in the example illustrated in FIG. 7, the first nozzle 40 discharges coolant outward from the outer surface, 41t, of the first nozzle 40.

The modification of the first nozzle 40 has the leading end portion 41 and the base end portion 42. To the leading end portion 41, coolant is supplied from the base end portion 42. In the example illustrated in FIG. 7, the leading end portion 41 has a first cylinder portion 41s and an end wall 47. The base end portion 42 is made up of the second cylinder portion 42s. The base end portion 42 of the modification of the first nozzle 40 is similar to the base end portion 42 of the first nozzle 40 described above by referring to FIGs. 4 to 6. In view of this, a description of the base end portion 42 will be omitted where otherwise a repetition occurs.

In the example illustrated in FIG. 7, a plurality of discharge holes 45h are formed in the leading end portion 41 of the first nozzle 40 (more specifically, the first cylinder portion 41s). The plurality of discharge holes 45h include a first discharge hole 45h-1 and a second discharge hole 45h-2. From the first discharge hole 45h-1 and the second discharge hole 45h-2, coolant is discharged in a direction(s) away from the first axis AX1 (in other words, the rotation axis AX of the rotator 2). The plurality of discharge holes 45h are preferably provided at equal angular intervals around the first axis AX1.

In the example illustrated in FIG. 7, the leading end portion 41 of the first nozzle 40 has an approximately truncated cone shape. Also in the example illustrated in FIG. 7, a plurality of V shaped grooves 46 are formed on the side surface of the leading end portion 41 of the first nozzle 40 (more specifically, on the first cylinder portion 41s). The plurality of V shaped grooves 46 include a V shaped first groove 46-1 and a V shaped second groove 46-2. Each of the V shaped grooves 46 restricts the diffusion range of the coolant (see, in FIG. 8, the ranges each defined between two adjacent single-dashed lines). More specifically, each V shaped groove 46 restricts the diffusion of the coolant in a direction perpendicular to the longitudinal direction of the groove 46. In the example illustrated in FIG. 8, the first discharge hole 45h-1 is provided in the first groove 46-1, and the second discharge hole 45h-2 is provided in the second groove 46-2. The plurality of V shaped grooves 46 are preferably provided at equal angular intervals around the first axis AX1.

In the example illustrated in FIG. 9, the first nozzle 40 receives the coolant supplied through the fluid passage FP and discharges the coolant in a direction away from the rotation axis AX. More specifically, the first nozzle 40 discharges coolant to make the coolant have a momentum component in the first direction *DR1* and a momentum component in a direction away from the rotation axis AX. In a configuration in which the second nozzle 50 is provided on the outside of the first nozzle 40, the coolant discharged from the first nozzle 40 collides with the second nozzle 50, and thus the direction of progress of the coolant is changed. After the direction of progress of the coolant is changed by the second nozzle 50, the coolant collides with the workpiece W and cools the workpiece W.

In the example illustrated in FIG. 10, the leading end portion 41 of the first nozzle 40 has the outer surface 41t. The outer surface 41t has an outer diameter that continuously decreases toward the leading end portion 41e. In the example illustrated in FIG. 10, the outer surface 41t has a linear shape in the illustrated cross-sectional view including the first axis AX1. Alternatively, the outer surface 41t may have a curvilinear shape in the illustrated cross-sectional view including the first axis AX1.

In the example illustrated in FIG. 10, the first nozzle 40 has the end wall 47. The end wall 47 covers an end portion of the first cylinder portion 41s which end portion is located on the first direction *DR1* side of the first cylinder portion 41s. The end wall 47 prevents the coolant supplied from the fluid passage FP from proceeding linearly along the first axis AX1. Preventing the coolant from proceeding linearly reduces the amount of coolant that is not diffused in a direction(s) away from the first axis AX1 and that instead proceeds in a region near the first axis AX1.

The configuration of the modification of the first nozzle 40 is also applicable in the second embodiment, described later (in other words, applicable in the coolant discharger 1B, in which the second nozzle 50 is omitted).

### (Second Nozzle 50)

The second nozzle 50 is provided on an outside of the first nozzle 40. The first nozzle 40, which is provided in the second nozzle 50, may be the first nozzle 40 described above by referring to FIGs. 4 to 6; the modification of the first nozzle 40 described above by referring to FIGs. 7 to 10; or any other first nozzle.

In the example illustrated in FIG. 11, the second nozzle 50 has a leading end portion (hereinafter referred to as "second leading end portion 51") and a base end portion (hereinafter referred to as "second base end portion 52"). In the example illustrated in FIG. 11, the second leading end portion 51 is made up of a third cylinder portion 51s. The second base end portion 52 is made up of a fourth cylinder portion 52s. The outer diameter of the fourth cylinder portion 52s may be larger than the outer diameter of the third cylinder portion 51s.

In the example illustrated in FIG. 11, the second nozzle 50 (more specifically, the second base end portion 52) has a plurality of attachment hole portions 57h. In this case, the second nozzle 50 is attached to the rotator 2 via fixing members (for example, bolts) engageable in the respective attachment hole portions 57h. It is to be noted that there is no particular limitation to how to attach the second nozzle 50 to the rotator 2. It is also to be noted that the first nozzle 40 may be attached to the rotator 2, instead of the second nozzle 50 being attached to the rotator 2.

In the example illustrated in FIG. 12, the second leading end portion 51 of the second nozzle 50 has a second inner surface 51n. The second inner surface 51n contacts the coolant discharged from the first nozzle 40 to change the direction of progress of the coolant. In this case, the direction of progress of the coolant is adjustable by the second inner surface 51n. By adjusting the direction of progress of the coolant, the workpiece W can be cooled or lubricated at an intended position. Also, chips can be removed from the workpiece W at an intended position.

In the example illustrated in FIG. 12, the inner diameter of the second inner surface 51n continuously increases toward the leading end 51e of the second nozzle 50. In this case, the relative position of the first nozzle 40 relative to the second nozzle 50 may be changed in a direction parallel to the rotation axis AX (or the first axis AX1). By changing the relative position, a distance *L2* is changed. The distance *L2* is the distance between the rotation axis AX (or the first axis AX1) and a position P, at which the coolant discharged from the first nozzle 40 collides with the second inner surface 51n. In this manner, the degree of diffusion of the coolant discharged from the second nozzle 50 is adjusted.

It is to be noted that the second nozzle 50 illustrated in FIG. 12 has an inner surface (51n) whose inner diameter continuously increases toward the leading end 51e, and that therefore, the second nozzle 50 is a cone nozzle according to the definition of a cone nozzle in this specification.

As exemplified in FIG. 12, the second inner surface 51n may be a trumpet shaped surface whose inner diameter increases toward the leading end 51e (in other words, in the illustrated cross-sectional view including the second axis AX2, the inclination angle of the second inner surface 51n relative to the second axis AX2 may continuously increase toward the leading end 51e of the second nozzle 50). In this case, the relative position of the first nozzle 40 relative to the second nozzle 50 may be changed in a direction parallel to the rotation axis AX. By changing the relative position, an incident angle *β* is changed. The incident angle *β* is the angle that the coolant discharged from the first nozzle 40 has relative to the second inner surface 51n. This configuration ensures that the part of the workpiece W at which the coolant discharged from the second nozzle 50 collides with the workpiece W can be adjusted more drastically. In other words, the above configuration reduces the movement stroke necessary for adjusting the part of the workpiece W at which the coolant collides with the workpiece W (the stroke over which the first nozzle 40 is moved relative to the second nozzle 50 is reduced).

In the example illustrated in FIG. 12, the minimal inner diameter of the second inner surface 51n is larger than the maximum inner diameter of the first inner surface 41n-1 of the first nozzle 40. Also, the leading end 51e of the second inner surface 51n of the second nozzle 50 is located further on the first direction *DR1* side than the leading end 41e of the first nozzle 40. Also, a base end 51b of the second inner surface 51n of the second nozzle 50 is located further on the second direction *DR2* side than the leading end 41e of the first nozzle 40.

In the example illustrated in FIG. 12, the position of the base end portion 42 of the first nozzle 40 is adjustable along the direction of the first axis AX1 relative to the second base end portion 52 of the second nozzle 50. After this position adjustment, the base end portion 42 of the first nozzle 40 may be fixed to the second base end portion 52 of the second nozzle 50. In the example illustrated in FIG. 12, the first nozzle 40 is fixed to the second nozzle 50 via a fixing member 59. An example of the fixing member 59 is a fixing thread. In the example illustrated in FIG. 12, the second nozzle 50 has a through hole 56h, which is capable of receiving the fixing member 59.

### (Adjustment of Relative Position of First Nozzle 40 Relative to Second Nozzle 50)

In the example illustrated in FIG. 12, the relative position of the first nozzle 40 relative to the second nozzle 50 is adjustable stepwise in a direction parallel to the first axis AX1 (in other words, the rotation axis AX). A plurality of depressed portions 49 may be formed on the outer circumferential surface of the first nozzle 40. The plurality of depressed portions 49 are for adjusting, stepwise, the relative position of the first nozzle 40 relative to the second nozzle 50.

In the example illustrated in FIG. 4 (or FIG. 7), the first nozzle 40 (more specifically, the base end portion 42 of the first nozzle 40) has the plurality of depressed portions 49. The plurality of depressed portions 49 include a first depressed portion 49-1 and a second depressed portion 49-2. The plurality of depressed portions 49 may include a third depressed portion 49-3, a fourth depressed portion 49-4, a fifth depressed portion 49-5, and a sixth depressed portion 49-6. In the example illustrated in FIG. 4 (or FIG. 7), a base end portion 49e of one depressed portion 49 in a direction along the first axis AX1 is different in position from the base end portion 49e of another depressed portion 49 in the direction along the first axis AX1. For example, a first base end portion 49e-1 of the first depressed portion 49-1 is positioned further on the base end side (in other words, the second direction *DR2* side) than a second base end portion 49e-2 of the second depressed portion 49-2. In this case, a depressed portion 49 (or a base end portion 49e) is selected from among the plurality of depressed portions 49 (or the plurality of base end portions 49e), and the selected depressed portion 49 (or base end portion 49e) is engaged with the fixing member 59. In this manner, the relative position of the first nozzle 40 relative to the second nozzle 50 is adjusted stepwise.

In the examples illustrated in FIGs. 1 and 2, the relative position of the first nozzle 40 relative to the second nozzle 50 is adjusted stepwise to adjust, stepwise, the discharge angle of the coolant discharged from the nozzle 4 (see the discharge angle *α1* and the discharge angle (2). Similarly, in the example illustrated in FIG. 9, the discharge angle of the coolant discharged from the nozzle 4 is adjustable stepwise by adjusting, stepwise, the relative position of the first nozzle 40 relative to the second nozzle 50.

In the example illustrated in FIG. 4 (or FIG. 7), the relative position of the first nozzle 40 relative to the second nozzle 50 (relative position in a direction parallel to the first axis AX1) is adjustable in six steps. Alternatively, the relative position of the first nozzle 40 relative to the second nozzle 50 (relative position in a direction parallel to the first axis AX1) may be adjustable in two steps, three steps, four steps, five steps, or seven or more steps.

Also alternatively, the relative position of the first nozzle 40 relative to the second nozzle 50 in a direction parallel to the first axis AX1 (in other words, the rotation axis AX) may be adjustable continuously (in other words, steplessly).

In the example illustrated in FIG. 13, the first nozzle 40 (more specifically, the base end portion 42 of the first nozzle 40) has a first thread portion 42m. The second nozzle 50 (more specifically, the second base end portion 52 of the second nozzle 50) has a second thread portion 52m, which is engageable with the first thread portion 42m. In this case, the first nozzle 40 is rotated relative to the second nozzle 50 to continuously adjust the relative position of the first nozzle 40 relative to the second nozzle 50.

In the example illustrated in FIG. 13, the first nozzle 40 is fixed to the second nozzle 50 via the fixing member 59. The second nozzle 50 may have the through hole 56h, which is capable of receiving the fixing member 59. In the example illustrated in FIG. 13, after the relative position of the first nozzle 40 relative to the second nozzle 50 is adjusted, the fixing member 59 engaged in the through hole 56h is moved to contact the outer surface of the first nozzle 40. As a result, the first nozzle 40 is fixed to the second nozzle 50.

### (Workpiece Holder 11A)

The workpiece holder 11A according to the first embodiment will be described. In the example illustrated in FIG. 14, the workpiece holder 11A includes the coolant discharger 1A and a workpiece holding member 26. The workpiece holding member 26 holds the workpiece W. The rotator 2 includes the shaft 20, which has the through hole 23h; and the workpiece holding member 26.

The coolant discharger 1A has already been described, and a description of the coolant discharger 1A will be omitted where otherwise a repetition occurs.

The workpiece holding member 26 is capable of holding and releasing the workpiece W. In the example illustrated in FIG. 14, the workpiece holding member 26 includes a holding member body 260 (a "holding member body" may also be referred to as a chuck) and jaws 265 (a " jaw" may also be referred to as a gripper). Each jaw 265 is movable relative to the holding member body 260. Each jaw 265 is movable by a jaw driver in a direction toward the rotation axis AX to hold the workpiece W. Each jaw 265 is also movable by the jaw driver in a direction away from the rotation axis AX to release the workpiece W. The jaw driver may be a pneumatic driver, a hydraulic driver, or an electric motor. In the example illustrated in FIG. 14, the workpiece holding member 26 includes a plurality of jaws 265, which include a first jaw 265a and a second jaw 265b. The plurality of jaws 265 are preferably provided at equal angular intervals around the rotation axis AX.

In the example illustrated in FIG. 14, the rotator 2 includes the shaft 20 and the workpiece holding member 26. The shaft 20 has the base end portion 21 and the leading end portion 22. The workpiece holding member 26 is fixed to the shaft 20 in any manner deemed convenient. In the example illustrated in FIG. 14, the workpiece holding member 26 is located further on the first direction *DR1* side than the shaft 20. The rotator 2 may include the supply conduit 24a. In the example illustrated in FIG. 14, the supply conduit 24a passes between the base end portion 21 of the shaft 20 and the leading end portion 22 of the shaft 20.

In the example illustrated in FIG. 14, the workpiece holding member 26 is provided at an end portion of the rotator 2 which end portion is located on the first direction *DR1* side of the rotator 2. The nozzle 4 discharges coolant to make the coolant have a momentum component in the first direction *DR1.* This ensures a smooth flow of coolant when the coolant is discharged toward the workpiece W, cools the workpiece W, and is discharged from the workpiece W. In particular, when the workpiece W has a cylindrical structure, coolant is smoothly discharged from the workpiece W's end portion Wa, which is located on the first direction *DR1* side of the workpiece W.

In the example illustrated in FIG. 14, the nozzle 4 (more specifically, the second nozzle 50) is provided in a manner in which the nozzle 4 contacts the shaft 20. The nozzle 4 (more specifically, the second nozzle 50) is also provided in a manner in which the nozzle 4 contacts the holding member body 260. The nozzle 4 (more specifically, the second nozzle 50) may be mounted on the shaft 20 or the holding member body 260.

In the example illustrated in FIG. 14, the position of at least a part of the nozzle 4 (for example, the first nozzle 40) is changeable in a direction parallel to the rotation axis AX relative to the shaft 20. In this case, it is not necessary to change the position of the shaft 20 at the time when the position of at least the part of the nozzle 4 (for example, the first nozzle 40) is changed.

In the example illustrated in FIG. 14, the position of at least a part of the nozzle 4 (for example, the first nozzle 40) is changeable in a direction parallel to the rotation axis AX relative to the workpiece holding member 26. In this case, it is not necessary to change the position of the workpiece holding member 26 at the time when the position of at least the part of the nozzle 4 (for example, the first nozzle 40) is changed.

In the example illustrated in FIG. 14, the position of at least a part of the nozzle 4 (for example, the first nozzle 40) is changeable in a direction parallel to the rotation axis AX relative to the supply conduit 24a, through which coolant is supplied. In this case, it is not necessary to change the position of the supply conduit 24a at the time when the position of at least the part of the nozzle 4 (for example, the first nozzle 40) is changed. As exemplified in FIG. 14, the nozzle 4 may be spaced apart from a leading end portion 24e of the supply conduit 24a.

### (Fluid Passage System)

In the example illustrated in FIG. 14, the workpiece holder 11A (or the coolant discharger 1A) includes the supply conduit 24a, which defines the fluid passage FP. The supply conduit 24a is provided in the through hole 23h of the shaft 20. The workpiece holder 11A (or the coolant discharger 1A) may include a second conduit 24c and a rotary joint 24b. The rotary joint 24b rotatably connects the second conduit 24c and the supply conduit 24a to each other. In the example illustrated in FIG. 14, the second conduit 24c is connected to a coolant container 83 via a pump 81.

### (Workpiece Rotator 10A)

The workpiece rotator 10A according to the first embodiment will be described. In the example illustrated in FIG. 15, the workpiece rotator 10A includes the workpiece holder 11A; a shaft support member 13, which rotatably supports the shaft 20; and a rotational driver 16, which rotates the shaft 20 about the rotation axis AX relative to the shaft support member 13.

The workpiece holder 11A has already been described, and a description of the workpiece holder 11A will be omitted where otherwise a repetition occurs.

In the example illustrated in FIG. 15, the shaft support member 13 includes a housing 130. The housing 130 surrounds at least a center portion of the shaft 20. The shaft support member 13 rotatably supports the shaft 20 via bearings 12.

In the example illustrated in FIG. 15, the rotational driver 16 includes a stator 135, which is provided at the shaft support member 13; and a rotor 25, which is provided at the shaft 20. In the example illustrated in FIG. 15, the rotational driver 16 is a device that rotates the shaft 20 by an electromagnetic action. Alternatively, the rotational driver 16 may be a device that drives the shaft 20 into rotation using, for example, a transmission belt.

### (First Driver 63)

In the examples illustrated in FIG. 15 and other drawings, the relative position of the first nozzle 40 relative to the second nozzle 50 is adjusted manually. Alternatively, as exemplified in FIG. 16, the relative position of the first nozzle 40 relative to the second nozzle 50 may be adjusted using a first driver 63. Also, the relative position of the first nozzle 40 relative to the second nozzle 50 may be adjusted with the workpiece W in a state of being attached to the rotator 2.

In the example illustrated in FIG. 16, the coolant discharger 1A (or the workpiece holder 11A) includes a first driver 63. The first driver 63 changes the position of at least a part of the nozzle 4 in a direction parallel to the rotation axis AX.

In the example illustrated in FIG. 16, the first driver 63 is capable of moving the first nozzle 40 in a direction parallel to the rotation axis AX. Alternatively, as exemplified in FIG. 17, the first driver 63 may be capable of moving the second nozzle 50 in a direction parallel to the rotation axis AX.

In the example illustrated in FIG. 16, the first driver 63 includes a pressing member 631, which presses the first nozzle 40; a piston 632, which is mechanically connected to the pressing member 631; a fluid cylinder 633 (for example, an air cylinder or a hydraulic cylinder), which provides driving force to the piston 632; and a fluid passage 634, through which fluid is supplied to the fluid cylinder 633. In other words, the first driver 63 is a fluid pressure driver. In an example configuration in which a jaw driver 27, which drives the jaw 265,is a fluid pressure driver, the first driver 63 may be a fluid pressure driver. The position of the pressing member 631 or the position of the piston 632 in a direction along the rotation axis AX may be maintained by closing a valve provided at the fluid passage 634, through which fluid is supplied to the fluid cylinder 633,or by using a stopper surface 635, which contacts the pressing member 631 or the piston.

Alternatively, the first driver 63 may be an electric motor. In an example configuration in which the jaw driver 27 is an electric motor, the first driver 63 may be an electric motor.

In a configuration in which the coolant discharger 1A (or the workpiece holder 11A) includes the first driver 63, the position of at least a part of the nozzle 4 (for example, the first nozzle 40 or the second nozzle 50) is easily changeable to make the coolant supplied to the position of the nose of a tool or to the machining position at which to machine the workpiece while the machining position changes based on the shape of the workpiece. Thus, the position of at least a part of the nozzle 4 is finely adjusted to an optimal position based on the machining position. This ensures a further reduction in the amount of coolant consumed.

### (Second Embodiment)

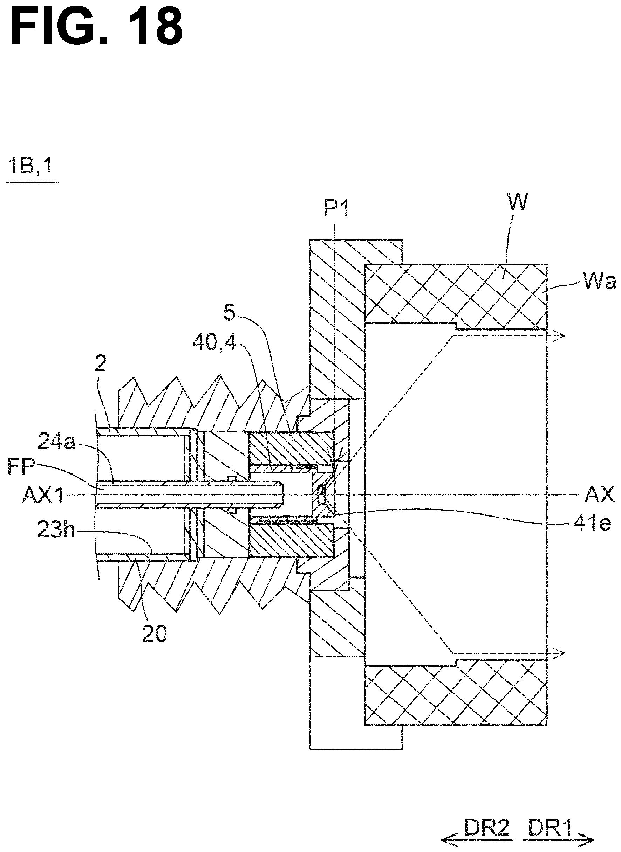

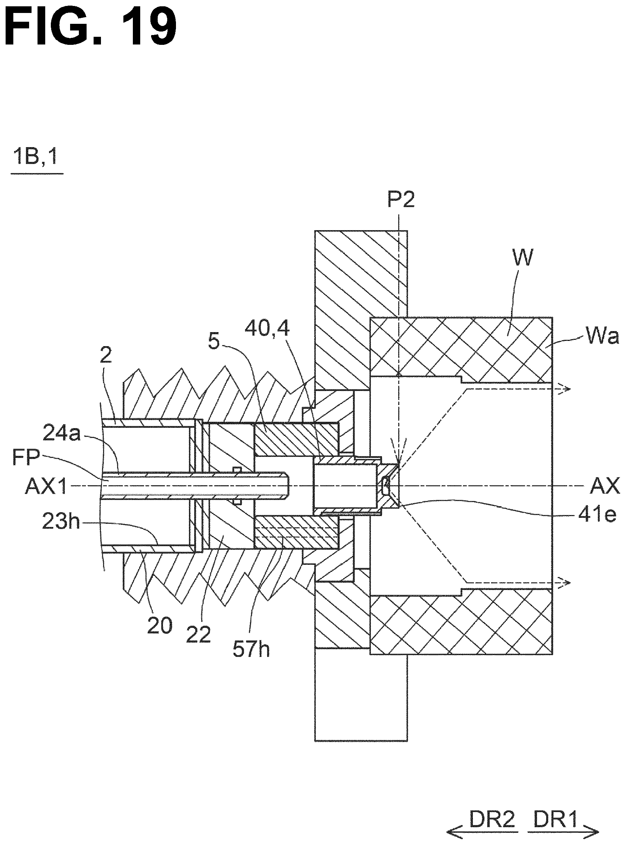

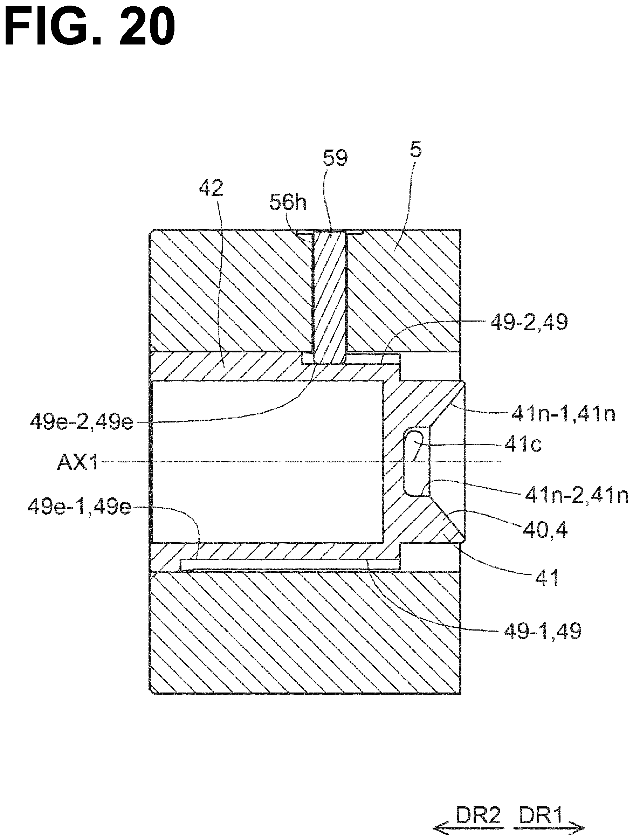

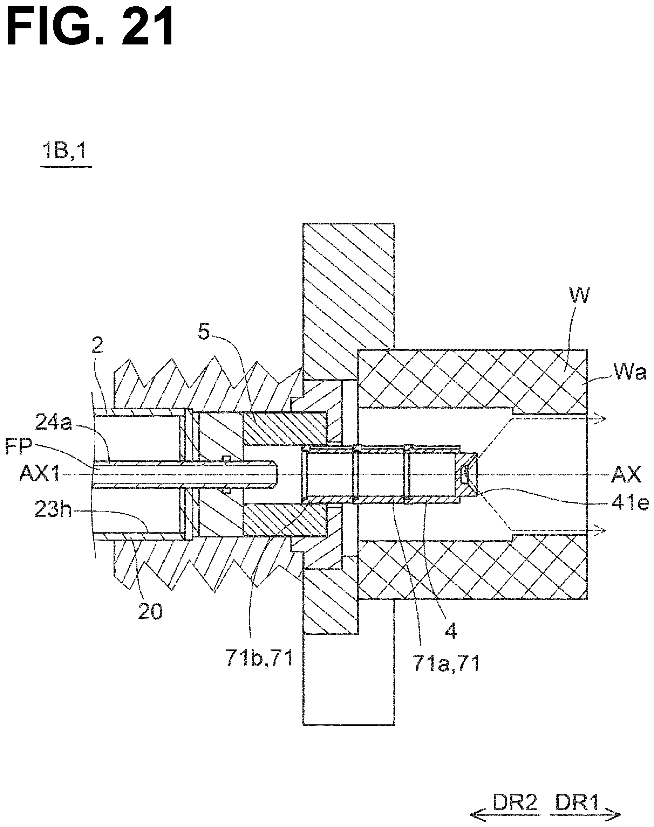

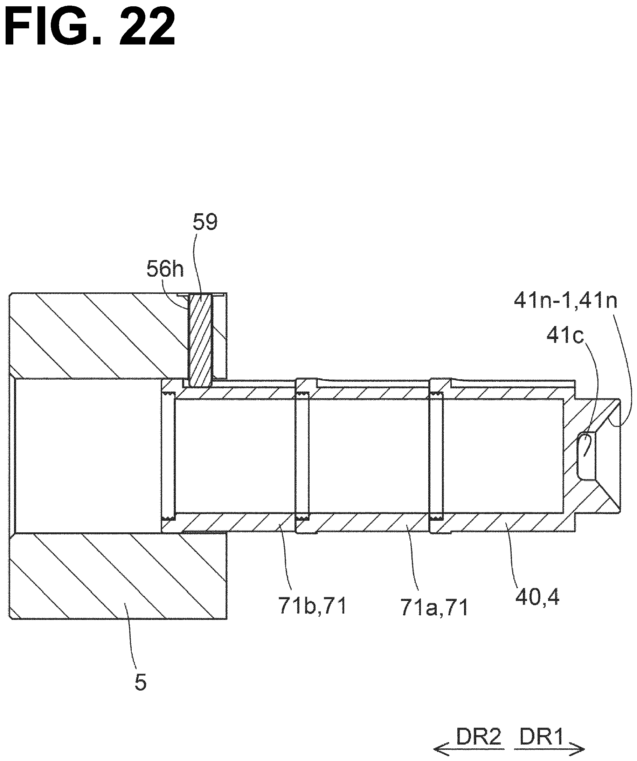

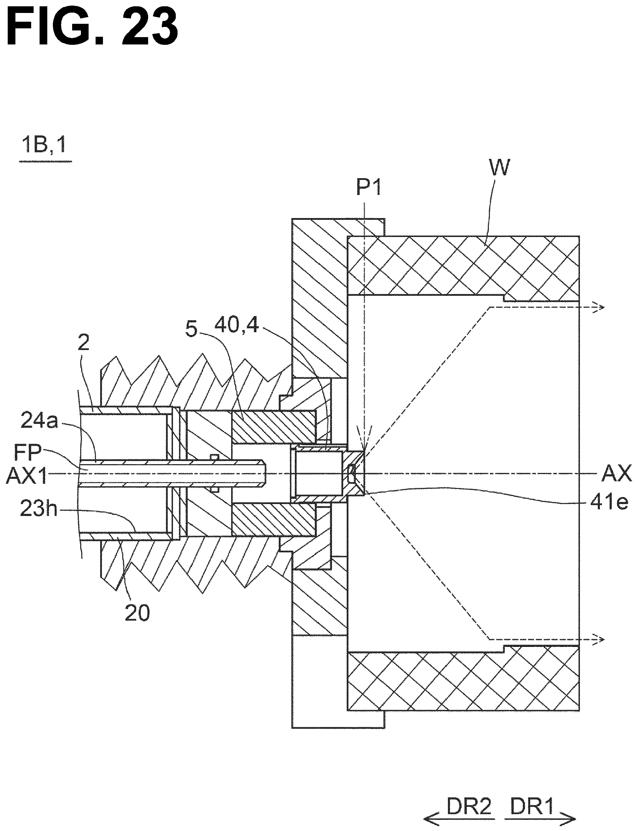

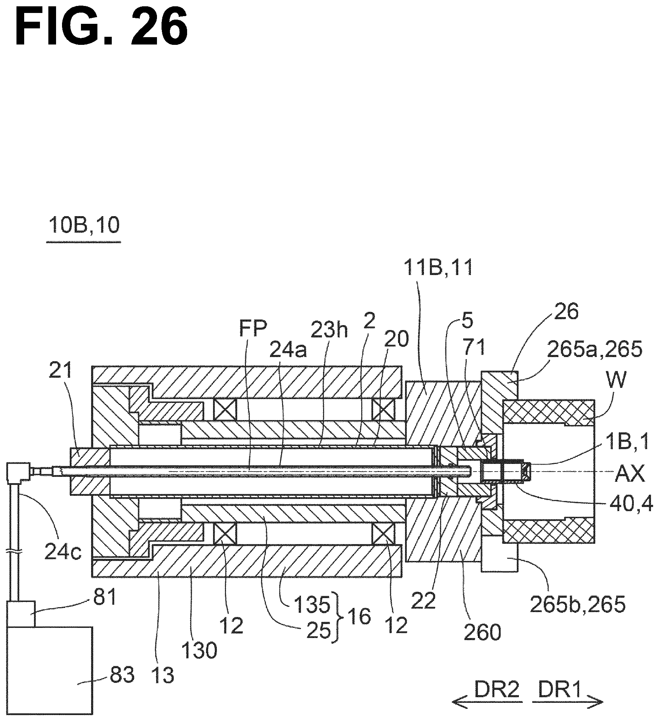

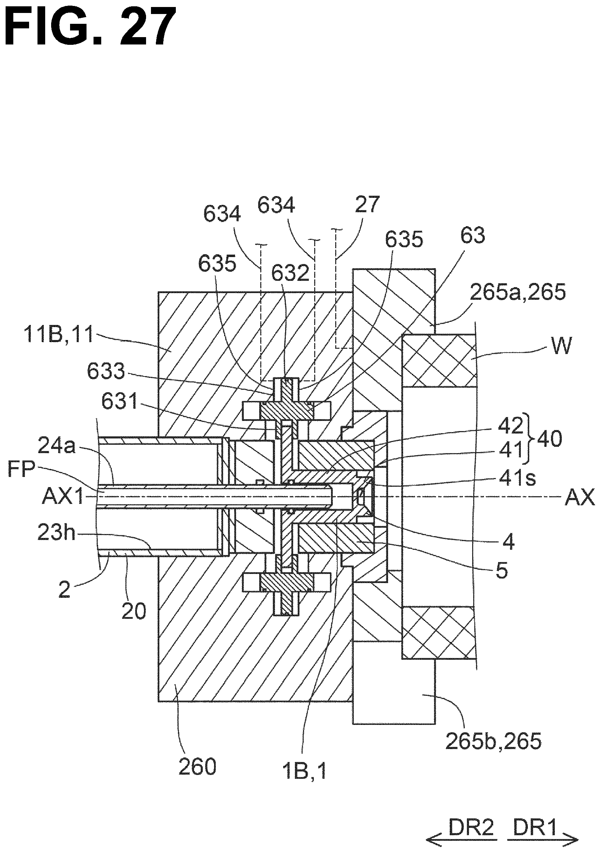

By referring to FIGs. 18 to 27, description will be made with regard to the coolant discharger 1B according to the second embodiment, a workpiece holder 11B according to the second embodiment, and a workpiece rotator 10B according to the second embodiment. FIGs. 18 and 19 are schematic cross-sectional views of the coolant discharger 1B according to the second embodiment. FIG. 20 is a schematic cross-sectional view of the nozzle 4 supported by a nozzle support member 5. FIG. 21 is a schematic cross-sectional view of the coolant discharger 1B according to a first modification of the second embodiment. FIG. 22 is a schematic cross-sectional view of the nozzle 4 supported by the nozzle support member 5 via a spacer 71. FIGs. 23 to 25 are schematic cross-sectional views of the coolant discharger 1B according to the first modification of the second embodiment. FIG. 26 is a schematic cross-sectional view of the workpiece rotator 10B according to the second embodiment. FIG. 27 is a schematic cross-sectional view of the workpiece holder 11B according to the first modification of the second embodiment.

The second embodiment is different from the first embodiment in that the second embodiment omits the second nozzle 50, which is otherwise provided on the outside of the first nozzle 40. The second embodiment is otherwise similar to the first embodiment.

The following description of the second embodiment will mainly focus on those respects in which the second embodiment is different from the first embodiment. In contrast, those respects already described in the first embodiment will not be described in the second embodiment to avoid a repetition of description. Thus, it will be readily appreciated that those respects that are not explicitly described in the second embodiment but are described in the first embodiment apply in the second embodiment.

(1) The coolant discharger 1B according to the second embodiment includes a rotator 2, which is rotatable about the rotation axis AX together with the workpiece W. The rotator 2 has a through hole 23h, which extends along the rotation axis AX. (2) The coolant discharger 1B also includes a fluid passage FP, which is provided in the through hole 23h. (3) The coolant discharger 1B also includes a nozzle 4, which is fluidally connected to the fluid passage FP and discharges coolant in a direction away from the rotation axis AX. (4) The position of at least a part of the nozzle 4 is changeable in a direction parallel to the rotation axis AX. It is to be noted that with the workpiece W in a state of being attached to the rotator 2, the fluid discharged from the nozzle 4 collides with the workpiece W.

With this configuration, the coolant discharger 1B according to the second embodiment provides effects similar to the effects provided by the coolant discharger 1A according to the first embodiment.

### (Nozzle 4)

In the examples illustrated in FIGs. 18 and 19, the position of the nozzle 4 is changeable in a direction parallel to the rotation axis AX between the first position P1 (see FIG. 18) and the second position P2 (see FIG. 19). When the nozzle 4 is at the first position P1, the coolant is caused to collide with a part of the inner surface of the workpiece W which part is located relatively on the second direction *DR2* side. In particular, when the workpiece W has a large inner diameter, the coolant is caused to more appropriately collide with the inner surface of the workpiece W (see FIG. 18). In contrast, when the nozzle 4 is at the second position P2, the coolant is caused to collide with a part of the inner surface of the workpiece W which part is located relatively on the first direction *DR1* side. In particular, when the workpiece W has a small inner diameter, the coolant is caused to more appropriately collide with the inner surface of the workpiece W (see FIG. 19).

The nozzle 4 receives the coolant supplied through the fluid passage FP and discharges the coolant in a direction away from the rotation axis AX. More specifically, the nozzle 4 discharges coolant to make the coolant have a momentum component in the first direction *DR1* and a momentum component in a direction away from the rotation axis AX. Additionally, the nozzle 4 may discharge the coolant to make the coolant have a circumferential momentum component around the rotation axis AX.

In the example illustrated in FIG. 18, the nozzle 4 is rotatable about the rotation axis AX together with the rotator 2. More specifically, the nozzle 4 is mounted on the rotator 2 (for example, the shaft 20 or the workpiece holding member 26) via the nozzle support member 5 in a manner in which the nozzle 4 is rotatable about the rotation axis AX. Alternatively, the nozzle 4 may be mounted on the supply conduit 24a.

### (First Nozzle 40)

In the example illustrated in FIG. 18, the nozzle 4 is made up of the first nozzle 40. In the example illustrated in FIG. 18, the center axis (in other words, the first axis AX1) of the first nozzle 40 coincides with the rotation axis AX. The configuration of the first nozzle 40 according to the first embodiment may be applied as it is to the configuration of the nozzle 4 (in other words, the first nozzle 40) according to the second embodiment. In this case, the above description of the first nozzle 40 according to the first embodiment applies in the description of the first nozzle 40 according to the second embodiment.

### (Nozzle Support Member 5)

The nozzle support member 5 supports the nozzle 4 (in other words, the first nozzle 40). In the example illustrated in FIG. 18, the nozzle support member 5 is provided on the outside of the nozzle 4. An example of the nozzle support member 5 is a cylindrical structure. The nozzle support member 5 may have a structure and/or functions similar to the structure and/or functions of the second base end portion 52 of the second nozzle 50 according to the first embodiment.

The nozzle support member 5 is mounted on the rotator 2 by any method deemed convenient. As exemplified in FIG. 19, the nozzle support member 5 may have an attachment hole portion 57h. In this case, the nozzle support member 5 may be mounted on the rotator 2 via a fixing member engageable in the attachment hole portion 57h.

### (Adjustment of Relative Position of Nozzle 4 Relative to Nozzle Support Member 5)

In the example illustrated in FIG. 20, the relative position of the nozzle 4 relative to the nozzle support member 5 is adjustable stepwise in a direction parallel to the first axis AX1 (in other words, the rotation axis AX). A plurality of depressed portions 49 may be formed on the outer circumferential surface of the nozzle 4 to adjust, stepwise, the relative position of the nozzle 4 relative to the nozzle support member 5. More specifically, the plurality of depressed portions 49 of the nozzle 4 (more specifically, the base end portion 42 of the nozzle 4) may include a first depressed portion 49-1 and a second depressed portion 49-2. In the example illustrated in FIG. 20, a base end portion 49e of one depressed portion 49 in a direction along the first axis AX1 is different in position from the base end portion 49e of another depressed portion 49 in the direction along the first axis AX1. In this case, a depressed portion 49 (or a base end portion 49e) is selected from among the plurality of depressed portions 49 (or the plurality of base end portions 49e), and the selected depressed portion 49 (or base end portion 49e) is engaged with the fixing member 59. In this manner, the relative position of the nozzle 4 relative to the nozzle support member 5 is adjusted stepwise.

In the example illustrated in FIG. 20, the nozzle 4 is fixed to the nozzle support member 5 via the fixing member 59. In the nozzle support member 5, a through hole 56h may be formed. The through hole 56h is capable of receiving the fixing member 59.

Alternatively, the relative position of the nozzle 4 relative to the nozzle support member 5 in a direction parallel to the first axis AX1 (in other words, the rotation axis AX) may be adjustable continuously (in other words, steplessly). For example, the nozzle 4 (in other words, the first nozzle 40) may have a first thread portion 42m (see FIG. 13, if necessary). In this case, the nozzle 4, which has the first thread portion 42m, is rotated relative to the nozzle support member 5, which has a second thread portion, to continuously adjust the relative position of the nozzle 4 relative to the nozzle support member 5.

### (First Modification of Adjustment of Relative Position of Nozzle 4 Relative to Nozzle Support Member 5)

In the example illustrated in FIG. 21, the coolant discharger 1B includes a spacer 71. The spacer 71 adjusts the position of the nozzle 4 in a direction parallel to the rotation axis AX. By being provided between the nozzle support member 5 and the nozzle 4, the spacer 71 adjusts the position of the nozzle 4 in a direction parallel to the rotation axis AX.

In the example illustrated in FIG. 21, a first spacer 71a and a second spacer 71b are provided between the nozzle support member 5 and the nozzle 4. In this manner, the position of the nozzle 4 is adjusted in a direction parallel to the rotation axis AX. It is to be noted that the number of spacers 71 provided between the nozzle support member 5 and the nozzle 4 may be one, two, three, or more. It is also to be noted that the coolant discharger 1B may include a plurality of spacers having different lengths. In this case, a spacer having an optimal length is selected from the plurality of spacers, and the selected spacer is arranged between the nozzle support member 5 and the nozzle 4.

In the example illustrated in FIG. 22, the nozzle 4 is mounted on the first spacer 71a by threading. The first spacer 71a is also mounted on the second spacer 71b by threading. It is to be noted that the means for mounting the nozzle 4 on the spacer 71 will not be limited to threading. The nozzle 4 may be mounted on the spacer 71 via a connection member such as a bolt. It is also to be noted that the means for mounting the spacer 71 on another spacer will not be limited to threading. The spacer 71 may be mounted on another spacer via a connection member such as a bolt.

In the example illustrated in FIG. 22, the spacer 71 is fixed to the nozzle support member 5 via the fixing member 59, such as a fixing thread. In the nozzle support member 5, the through hole 56h may be formed. The through hole 56h is capable of receiving the fixing member 59.

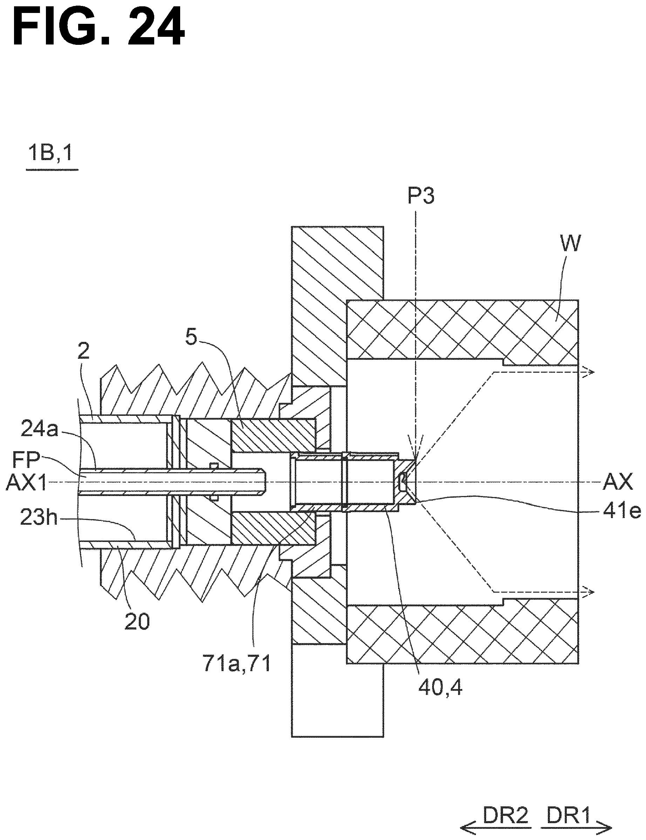

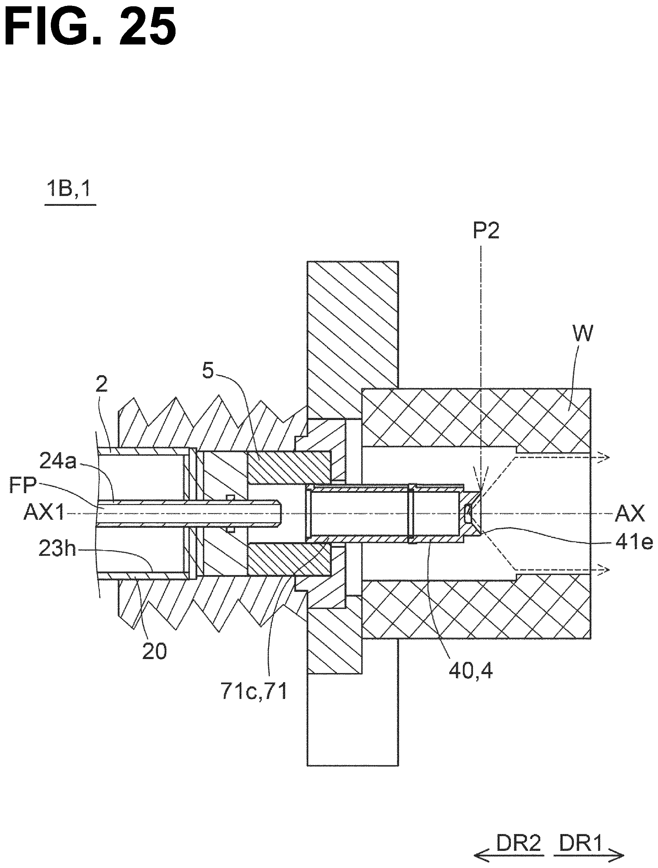

In the examples illustrated in FIGs. 23 to 25, the position of the nozzle 4 is changeable in a direction parallel to the rotation axis AX between the first position P1 (see FIG. 23), a third position P3 (see FIG. 24), and the second position P2 (see FIG. 25). It is to be noted that the third position P3 is a position between the first position P1 and the second position P2.

In the example illustrated in FIG. 23, the nozzle 4 is supported directly by the nozzle support member 5. When the nozzle 4 is at the first position P1, the coolant is caused to collide with a part of the inner surface of the workpiece W which part is located relatively on the second direction *DR2* side. In particular, when the workpiece W has a large inner diameter, the coolant is caused to more appropriately collide with the inner surface of the workpiece W.

In the example illustrated in FIG. 24, the nozzle 4 is supported by the nozzle support member 5 via the first spacer 71a. When the nozzle 4 is at the third position P3, the coolant can be caused to collide with the inner surface of a workpiece W having a relatively small inner diameter as compared with when the nozzle 4 is at the first position P1.

In the example illustrated in FIG. 25, the nozzle 4 is supported by the nozzle support member 5 via a second spacer 71c, which is longer than the first spacer 71a. Alternatively, as exemplified in FIG. 21, the nozzle 4 may be supported by the nozzle support member 5 via the first spacer 71a and the second spacer 71b. When the nozzle 4 is at the second position P2, the coolant is caused to collide with a part of the inner surface of the workpiece W which part is located relatively on the first direction *DR1* side. In particular, when the workpiece W has a small inner diameter, the coolant is caused to collide with the inner surface of the workpiece W.

### (Workpiece Holder 11B)

As exemplified in FIG. 26, the workpiece holder according to the second embodiment 11B includes the above-described coolant discharger 1B and a workpiece holding member 26. The workpiece holding member 26 holds the workpiece W. The rotator 2 includes a shaft 20, which has a through hole 23h, and the workpiece holding member 26.

The coolant discharger 1B has already been described, and the rotator 2, the workpiece holding member 26, and the shaft 20 are as described in the first embodiment. A description of these configurations will be omitted where otherwise a repetition occurs.

In the example illustrated in FIG. 26, the position of the nozzle 4 is changeable in a direction parallel to the rotation axis AX relative to the shaft 20. In this case, it is not necessary to change the position of the shaft 20 at the time when the position of the nozzle 4 is changed.

In the example illustrated in FIG. 26, the position of the nozzle 4 is changeable in a direction parallel to the rotation axis AX relative to the workpiece holding member 26. In this case, it is not necessary to change the position of the workpiece holding member 26 at the time when the position of the nozzle 4 is changed.

In the example illustrated in FIG. 26, the position of the nozzle 4 is changeable in a direction parallel to the rotation axis AX relative to the supply conduit 24a, through which coolant is supplied. In this case, it is not necessary to change the position of the supply conduit 24a at the time when the position of the nozzle 4 is changed.

### (Workpiece Rotator 10B)

As exemplified in FIG. 26, the workpiece rotator 10B according to the second embodiment includes the workpiece holder 11B; a shaft support member 13, which rotatably supports the shaft 20; and a rotational driver 16, rotates the shaft 20 about the rotation axis AX relative to the shaft support member 13.

The workpiece holder 11B has already been described, and the shaft support member 13 and the rotational driver 16 are as described in the first embodiment. A description of these configurations will be omitted where otherwise a repetition occurs.

### (First Driver 63)

In the examples illustrated in FIG. 26 and other drawings, the position of the nozzle 4 in a direction parallel to the rotation axis AX is adjusted manually. Alternatively, as exemplified in FIG. 27, the position of the nozzle 4 in a direction parallel to the rotation axis AX may be adjusted using the first driver 63. Also, the position of the nozzle 4 in a direction parallel to the rotation axis AX may be adjusted with the workpiece W in a state of being attached to the rotator 2.

In the example illustrated in FIG. 27, the coolant discharger 1B (or the workpiece holder 11B) includes a first driver 63. The first driver 63 changes the position of the nozzle 4 in a direction parallel to the rotation axis AX. The first driver 63 moves the nozzle 4 in a direction parallel to the rotation axis AX.

In the example illustrated in FIG. 27, the first driver 63 includes a pressing member 631, which presses the nozzle 4; a piston 632, which is mechanically connected to the pressing member 631; a fluid cylinder 633 (for example, an air cylinder or a hydraulic cylinder), which provides driving force to the piston 632; and a fluid passage 634, through which fluid is supplied to the fluid cylinder 633. In other words, the first driver 63 is a fluid pressure driver. Alternatively, the first driver 63 may be an electric motor.

In a configuration in which the coolant discharger 1B (or the workpiece holder 11B) includes the first driver 63, the position of at least a part of the nozzle 4 (for example, the whole nozzle 40) is easily changeable to make the coolant supplied to the position of the nose of a tool or to the machining position at which to machine the workpiece while the machining position changes based on the shape of the workpiece. Thus, the position of at least a part of the nozzle 4 is finely adjusted to an optimal position based on the machining position. This ensures a further reduction in the amount of coolant consumed.

### (Third Embodiment)

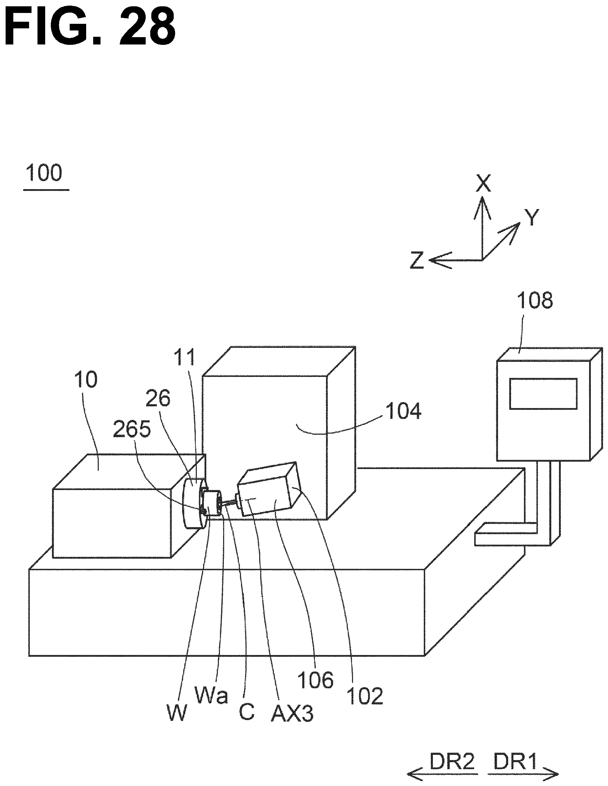

By referring to FIGs. 1 to 28, the machine tool 100 according to the third embodiment will be described. FIG. 28 is a schematic perspective view of the machine tool 100 according to the third embodiment.

The following description of the third embodiment will mainly focus on those respects in which the third embodiment is different from the first and embodiments. In contrast, those respects already described in the first or second embodiment will not be described in the third embodiment to avoid a repetition of description. Thus, it will be readily appreciated that those respects that are not explicitly described in the third embodiment but are described in the first embodiment or the second embodiment apply in the third embodiment.

The machine tool 100 according to the third embodiment includes a workpiece rotator 10, a tool holder 102, a second driver 104, and a controller 108.

The workpiece rotator 10 may be the workpiece rotator 10A according to the first embodiment, the workpiece rotator 10B according to the second embodiment, or another workpiece rotator. The workpiece rotator 10 includes (1) a workpiece holder 11, (2) a shaft support member 13, which rotatably supports the shaft 20, and (3) the rotational driver 16, which rotates the shaft 20 about the rotation axis AX relative to the shaft support member 13. The configurations of the elements of the workpiece holder 11 have already been described in the first or second embodiment, and a description of the configurations of the elements of the workpiece holder 11 will be omitted where otherwise a repetition occurs.

The tool holder 102 is capable of holding a tool C, which is for machining the workpiece W. The tool C may be an inner diameter turning tool, an inner diameter threading tool, an inner diameter grooving tool, or another tool that is used to machine the inner surface of a cylindrical workpiece W. The tool C may also be a skiving working tool for forming an internally-toothed gear on the workpiece W.

The second driver 104 moves the tool holder 102 relative to the workpiece holder 11. The second driver 104 may be a device that moves the tool holder 102 three-dimensionally. In other words, the second driver 104 may be capable of moving the tool holder 102 in a direction along an X axis, capable of moving the tool holder 102 in a direction along a Y axis, and capable of moving the tool holder 102 in a direction along a Z axis. In the example illustrated in FIG. 28, the X axis is a direction parallel to the vertical direction, the Z axis is a direction parallel to the rotation axis AX of the shaft 20, and the Y axis is a direction perpendicular to both the X axis and the Z axis.
the tool holder 102 may include a third driver 106. The third driver 106 rotates the tool C about a second rotation axis AX3.

The machine tool 100 may include a first driver 63. The first driver 63 changes the position of at least a part of the nozzle 4 (for example, the first nozzle 40, the second nozzle 50, or the whole nozzle 4). The first driver 63 changes the position of at least a part of the nozzle 4 in a direction parallel to the rotation axis AX (see FIG. 16, 17, or FIG. 27, if necessary). The first driver 63 has already been described in the first embodiment or the second embodiment, and a description of the first driver 63 will be omitted where otherwise a repetition occurs.

The controller 108 controls the coolant discharger 1, the rotational driver 16, and the second driver 104.

The controller 108 transmits a control signal to the coolant discharger 1 to cause the nozzle 4 to start discharging coolant. The controller 108 may transmit a control signal to the coolant discharger 1 to control the amount of coolant discharged from the nozzle 4.

The controller 108 transmits a control signal to the rotational driver 16 to cause the rotational driver 16 to start rotating the shaft 20. The controller 108 may transmit a control signal to the rotational driver 16 to control the number of rotations of the shaft 20. The controller 108 also transmits a control signal to the second driver 104 to cause the second driver 104 to move the tool holder 102. Upon receipt of the control signal from the controller 108, the second driver 104 moves the tool holder 102 to cause the tool C to contact the inner surface of the workpiece W.

In a configuration in which the machine tool 100 includes the first driver 63, the controller 108 controls the first driver 63. More specifically, the controller 108 transmits a control signal to the first driver 63 to cause the first driver 63 to move at least a part of the nozzle 4 (for example, the first nozzle 40, the second nozzle 50, or the whole nozzle 4) in a direction parallel to the rotation axis AX. The controller 108 may transmit a control signal to the first driver 63 to cause the first driver 63 to move at least a part of the nozzle 4 in the first direction *DR1* or move at least a part of the nozzle 4 in the second direction *DR2*.

In a configuration in which the machine tool 100 includes the rotational driver 16 and the controller 108, which controls the second driver 104, the machine tool 100 is able to analyze motion commands made for machining purposes (for example, a machining program) to identify the position of the nose of the tool or the machining position at which to machine the workpiece while the machining position changes based on the shape of the workpiece. In a configuration in which the controller 108 controls the first driver 63, the controller 108 is able to control the position of at least a part of the nozzle 4 (for example, the first nozzle 40, the second nozzle 50, or the whole nozzle 4) to cause the supplied coolant to follow changes in the position of the tool nose identified by the controller 108 or in the machining position of the workpiece identified by the controller 108. In a configuration in which the controller 108 controls the coolant discharger 1, the controller 108 is able to control the amount of coolant supplied to the nozzle 4 to minimize the amount of the coolant that is following changes in the position of the tool nose or in the machining position of the workpiece. As a result, the amount of coolant consumed is minimized.

The controller 108 may control the third driver 106. For example, the controller 108 transmits a control signal to the third driver 106 to cause the third driver 106 to rotate the tool C.

### (Method of Using Coolant Discharger)

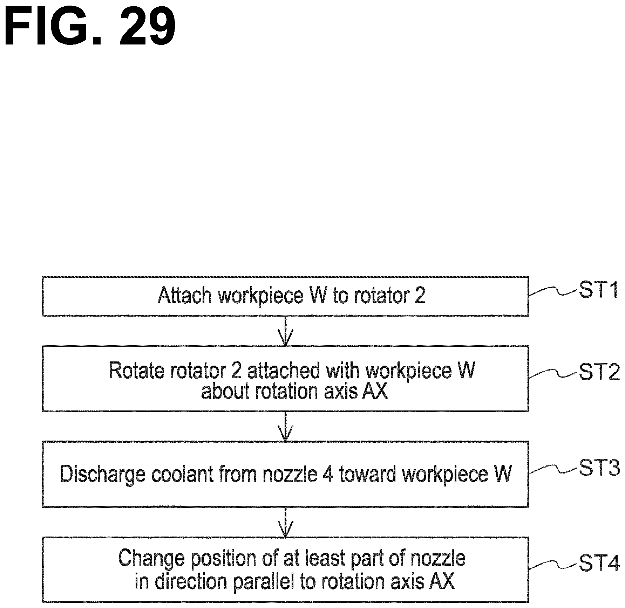

By referring to FIGs. 1 to 29, description will be made with regard to a method, according to an embodiment, of using a coolant discharger. FIG. 29 is a flowchart of an example of the embodiment's method of using a coolant discharger.

In the embodiment's method of using a coolant discharger, a coolant discharger 1 is used. The coolant discharger 1 may be the coolant discharger 1A according to the first embodiment, the coolant discharger 1B according to the second embodiment, or another coolant discharger.

(1) The coolant discharger 1 includes a rotator 2, which is rotatable about the rotation axis AX. The rotator 2 has a through hole 23h, which extends along the rotation axis AX. (2) The coolant discharger 1 also includes a fluid passage FP, which is provided in the through hole 23h. (3) The coolant discharger 1 also includes a nozzle 4, which is fluidally connected to the fluid passage FP and discharges coolant. The rotator 2, the fluid passage FP, and the nozzle 4 have already been described in the first embodiment or the second embodiment, and a description of the rotator 2, the fluid passage FP, and the nozzle 4 will be omitted where otherwise a repetition occurs.

At first step ST1, a workpiece W is attached to the rotator 2. The first step ST1 is an attaching step. FIGs. 15, 16, 26, 27 and other drawings each illustrate a state in which the workpiece W is attached to an end portion of the rotator 2 which end portion is located on the first direction *DR1* side of the rotator 2. The attaching step may include holding the workpiece W using a workpiece holding member 26 (more specifically, a jaw 265).

At second step ST2, the rotator 2 attached with the workpiece W is rotated about the rotation axis AX. The second step ST2 is a rotating step. The rotating step includes rotating, using the rotational driver 16, the rotator 2 (more specifically, the shaft 20) about the rotation axis AX. In a configuration in which the nozzle 4 is mounted on the rotator 2, the rotating step includes rotating the rotator 2, the nozzle 4, and the workpiece W about the rotation axis AX.

In the example illustrated in FIG. 28, during the rotating step (second step ST2), the tool C contacts the workpiece W (more specifically, the inner surface of the workpiece W). In this case, the workpiece W (more specifically, the inner surface of the workpiece W) is machined by the tool C.

At third step ST3, coolant is discharged from the nozzle 4 toward the workpiece W. The third step ST3 is a discharging step. The discharging step is performed during the rotating step. In other words, coolant is discharged from the nozzle 4 toward the workpiece W while the rotator 2 attached with the workpiece W is rotating about the rotation axis AX.

At the discharging step (third step ST3), the nozzle 4 preferably discharges coolant to make the coolant have a momentum component in the first direction *DR1* and a momentum component in a direction away from the rotation axis AX. Additionally, at the discharging step (third step ST3), the nozzle 4 may discharge coolant to make the coolant have a circumferential momentum component around the rotation axis AX.

In the example illustrated in FIG. 28, during the rotating step and the discharging step, the tool C contacts the workpiece W (more specifically, the inner surface of the workpiece W). In this case, the workpiece W and the tool C are cooled or lubricated by the coolant, and chips cut off the workpiece W are removed from the workpiece W by the coolant.

In a configuration in which the workpiece W has a cylindrical structure, during the discharging step, the coolant used to cool the workpiece W is discharged from the workpiece W's end portion Wa, which is located on the first direction *DR1* side of the workpiece W.

At fourth step ST4, the position of at least a part of the nozzle 4 is changed in a direction parallel to the rotation axis AX. The fourth step ST4 is a position changing step. FIGs. 12, 16, 17, and other drawings exemplify a configuration in which the nozzle 4 includes the first nozzle 40 and the second nozzle 50. In this configuration, at the position changing step, the position of at least one of the first nozzle 40 and the second nozzle 50 may be changed in a direction parallel to the rotation axis AX. Alternatively, as exemplified in FIGs. 26, 27, and other drawings, at the position changing step, the position of the whole nozzle 4 may be changed in a direction parallel to the rotation axis AX.

The position changing step (fourth step ST4) may be performed before the attaching step (first step ST1) or may be performed after the rotating step (second step ST2) and the discharging step (third step ST3). For example, the position of at least a part of the nozzle 4 may be changed in a direction parallel to the rotation axis AX to deal with the inner diameter of the next workpiece W to be attached to the rotator 2 (more specifically, the workpiece holding member 26). When the next workpiece W to be attached to the rotator 2 has an inner diameter smaller than the inner diameter of the workpiece previously attached to the rotator 2, the position of at least a part of the nozzle 4 may be changed in a direction parallel to the rotation axis AX to make smaller the discharge angle of the coolant discharged from the nozzle 4 (discharge angle relative to the rotation axis AX). In contrast, when the next workpiece W to be attached to the rotator 2 has an inner diameter larger than the inner diameter of the workpiece previously attached to the rotator 2, the position of at least a part of the nozzle 4 may be changed in a direction parallel to the rotation axis AX to make larger the discharge angle of the coolant discharged from the nozzle 4 (discharge angle relative to the rotation axis AX).

The position changing step (fourth step ST4) may be performed manually or may be performed using the first driver 63. When the position changing step is performed manually, the position changing step is preferably performed with the workpiece W not attached to the rotator 2 (more specifically, the workpiece holding member 26). In contrast, when the position changing step is performed using the first driver 63, the position changing step may be performed with the workpiece W attached to the rotator 2 (more specifically, the workpiece holding member 26), or may be performed with the workpiece W not attached to the rotator 2.

When the position changing step is performed using the first driver 63, the position changing step may be performed while the workpiece W attached to the rotator 2 is being machined. More specifically, during machining of the workpiece W, it is possible to change the position of at least a part of the nozzle 4 in a direction parallel to the rotation axis AX to change the position of application of the coolant on the workpiece W so that the coolant follows changes in the machining position of the workpiece W.

The present invention will not be limited to the above-described embodiments and/or modifications; it will be appreciated that the embodiments may be modified or changed in any manner deemed convenient within the technical spirit and scope of the present invention. Also, the various techniques used in each of the embodiments and/or modifications are applicable in other embodiments and/or modifications insofar as no technical contradiction occurs. Further, the optional configurations in the embodiments and/or modifications may be omitted in any manner deemed convenient.

### Reference Signs List

1, 1A, 1B ... Coolant discharger, 2 ... Rotator, 4 ... Nozzle, 5 ... Nozzle support member, 10, 10A, 10B ... Workpiece rotator, 11, 11A, 11B ... Workpiece holder, 12 ... Bearing, 13 ... Shaft support member, 16 ... Rotational driver, 20 ... Shaft, 21 ... Base end portion, 22 ... Leading end portion, 23h ... Through hole, 24a ... Supply conduit, 24b ... Rotary joint, 24c ... Second tube, 24e ... Leading end portion, 25 ... Rotor, 26 ... Workpiece holding member, 27 ... Jaw driver, 40 ... First nozzle, 41 ... Leading end portion, 41c ... Second opening, 41e ... Leading end portion, 41h ... Supply hole portion, 41n ... Inner surface, 41n-1 ... First inner surface, 41n-2 ... Cylindrical inner surface, 41s ... First cylinder portion, 41t ... Outer surface, 41w ... Wall, 42 ... Base end portion, 42m ... First thread portion, 42s ... Second cylinder portion, 43 ... Partition wall, 43c ... First opening, 44 ... Closing member, 45h ... Discharge hole, 45h-1 ... First discharge hole, 45h-2 ... Second discharge hole, 46 ... Groove, 46-1 ... First groove, 46-2 ... Second groove, 47 ... End wall, 49 ... Depression, 49e ... Base end portion, 50 ... Second nozzle, 51 ... Second leading end portion, 51b ... Base end portion, 51e ... Leading end portion, 51n ... Second inner surface, 51s ... Third cylinder portion, 52 ... Second base end portion, 52m ... Second thread portion, 52s ... Fourth cylinder portion, 56h ... Through hole, 57h ... Attachment hole portion, 59 ... Fixing member, 63 ... First driver, 71 ... Spacer, 71a ... First spacer, 71b ... Second spacer, 71c ... Second spacer, 81 ... Pump, 83 ... Coolant container, 100 ... machine tool, 102 ... Tool holder, 104 ... Second driver, 106 ... Third driver, 108 ... Controller, 130 ... housing, 135 ... Stator, 260 ... holding member body, 265 ... Jaw, 265a ... First jaw, 265b ... Second jaw, 631 ... Pressing member, 632 ... Piston, 633 ... Fluid cylinder, 634 ... Fluid passage, 635 ... Stopper surface, C ... Tool, FP ... Fluid passage, SP 1 ... Space, W ... Workpiece, Wa ... Workpiece's end portion on first direction side

## Claims

1. A coolant discharger comprising:
a rotator that has a through hole extending along a rotation axis of the rotator and that is rotatable about the rotation axis together with a workpiece;
a fluid passage provided in the through hole; and
a nozzle fluidally connected to the fluid passage and configured to discharge a coolant in a direction away from the rotation axis, a position of at least a part of the nozzle being changeable in a direction parallel to the rotation axis.

2. The coolant discharger according to claim 1, wherein the workpiece has a cylindrical structure, and the nozzle is configured to discharge the coolant toward an inner surface of the cylindrical structure.

3. The coolant discharger according to claim 1 or 2, wherein the nozzle is rotatable about the rotation axis together with the rotator.

4. The coolant discharger according to any one of claims 1 to 3,
wherein the nozzle comprises a cone nozzle having an inner surface whose inner diameter continuously increases toward a leading end portion of the cone nozzle, the cone nozzle having:
the leading end portion;
a base end portion; and
a supply hole portion through which the coolant is supplied toward an inner surface of the leading end portion from an inside of a wall of the cone nozzle, the wall constituting the leading end portion of the cone nozzle.

5. The coolant discharger according to any one of claims 1 to 3, wherein the nozzle has
a first cylinder portion,
a V shaped first groove formed on the first cylinder portion,
a first discharge hole provided on the first groove,
a V shaped second groove formed on the first cylinder portion,
a second discharge hole provided on the second groove, and
an end wall covering an end portion of the first cylinder portion.

6. The coolant discharger according to any one of claims 1 to 5,
wherein the nozzle comprises
a first nozzle configured to receive the coolant supplied through the fluid passage and discharge the coolant in the direction away from the rotation axis, and
a second nozzle provided on an outside of the first nozzle and configured to contact the coolant discharged from the first nozzle to change a progress direction in which the coolant proceeds, and
wherein a relative position of the first nozzle relative to the second nozzle is changeable in the direction parallel to the rotation axis.

7. The coolant discharger according to claim 6,
wherein at a leading end portion of the first nozzle, the first nozzle has a first inner surface configured to receive the coolant supplied through the fluid passage and diffuse the coolant in all directions of 360 degrees about the rotation axis, and
wherein a distance between the rotation axis and the first inner surface increases toward the leading end portion of the first nozzle.

8. The coolant discharger according to claim 6 or 7, wherein at a leading end portion of the second nozzle, the second nozzle has a second inner surface having an inner diameter that continuously increases toward the leading end portion of the second nozzle.

9. The coolant discharger according to any one of claims 6 to 8, wherein the relative position of the first nozzle relative to the second nozzle is adjustable stepwise or continuously.

10. A workpiece holder comprising:
the coolant discharger according to any one of claims 1 to 9; and
a workpiece holding member configured to hold the workpiece;
wherein the rotator comprises
a shaft having the through hole, and
the workpiece holding member.

11. The workpiece holder according to claim 10, wherein the position of at least the part of the nozzle is changeable in the direction parallel to the rotation axis relative to the shaft and the workpiece holding member.

12. A workpiece rotator comprising:
the workpiece holder according to claim 10 or 11;
a shaft support member configured to rotatably support the shaft; and
a rotational driver configured to rotate the shaft about the rotation axis relative to the shaft support member.

13. A machine tool comprising:
the workpiece rotator according to claim 12;
a tool holder configured to hold a tool with which the workpiece is machined;
a second driver configured to move the tool holder relative to the workpiece holder; and
a controller configured to control the coolant discharger, the rotational driver, and the second driver.

14. The machine tool according to claim 13, further comprising a first driver configured to change the position of at least the part of the nozzle in the direction parallel to the rotation axis,
wherein the controller is configured to control the first driver, in addition to controlling the coolant discharger, the rotational driver, and the second driver.

15. A method of using a coolant discharger,
the coolant discharger comprising:
a rotator that has a through hole extending along a rotation axis of the rotator and that is rotatable about the rotation axis;
a fluid passage provided in the through hole; and
a nozzle fluidally connected to the fluid passage and configured to discharge a coolant, a position of at least a part of the nozzle being changeable in a direction parallel to the rotation axis,
the method of using comprising:
an attaching step of attaching a workpiece to the rotator;
a rotating step of rotating the rotator attached with the workpiece about the rotation axis;
a discharging step of discharging the coolant from the nozzle toward the workpiece; and
a position changing step of changing the position of at least the part of the nozzle in the direction parallel to the rotation axis.
